# EUROPEAN PATENT APPLICATION

(11) **EP 4 561 003 A1**
(43) Date of publication of application: **28.05.2025**
(21) Application number: 23854324.3
(22) Date of filing: 10.08.2023
(51) Int. Cl.: H04L 41/0896

(54) **BANDWIDTH CONTROL METHOD AND APPARATUS**

(30) Priority: 15.08.2022 CN 202210976669
(71) Applicant: Huawei Technologies Co., Ltd., Shenzhen, Guangdong 518129 (CN)
(72) Inventor: WANG, Yaxin, Shenzhen, Guangdong 518129 (CN); XU, Shengfeng, Shenzhen, Guangdong 518129 (CN); YANG, Yanmei, Shenzhen, Guangdong 518129 (CN); LI, Yan, Shenzhen, Guangdong 518129 (CN)
(74) Representative: MERH-IP Matias Erny Reichl Hoffmann Patentanwälte PartG mbB
(86) International application number: PCT/CN2023/112301
(87) International publication number: WO 2024/037423

(57) **Abstract**

This application provides a bandwidth control method and an apparatus. The method includes: A service enabler architecture layer data delivery SEALDD server obtains bandwidth limit information from a first server, where the bandwidth limit information includes bandwidth limit information of the first server and/or bandwidth limit information of a first user. The SEALDD server determines, based on the bandwidth limit information, bandwidth allocated to a first SEALDD client, where the first SEALDD client is a client corresponding to the first user. The SEALDD server sends, to the first SEALDD client, information about the bandwidth allocated to the first SEALDD client. According to the technical solutions provided in this application, during determining of the bandwidth allocated to the first SEALDD client, the bandwidth limit information from the first server is considered. Therefore, this can avoid port congestion caused by insufficient bandwidth of the first server, and help improve user experience.

## Description

This application claims priority to Chinese Patent Application No. 202210976669.9, filed with the China National Intellectual Property Administration on August 15, 2022 and entitled "BANDWIDTH CONTROL METHOD AND APPARATUS", which is incorporated herein by reference in its entirety.

### TECHNICAL FIELD

Embodiments of this application relate to the communication field, and more specifically, to a bandwidth control method and an apparatus.

### BACKGROUND

In a process in which an application server (application server, AS) provides a service for a user, different users occupy different bandwidth resources, and different services also occupy different bandwidth resources.

The application server has a limited processing capability and limited bandwidth resources. Therefore, bandwidth needs to be properly controlled to enable different users to use the bandwidth resources more fairly, improve service experience of most users, and avoid port congestion.

### SUMMARY

This application provides a bandwidth control method and an apparatus. According to the method, port congestion can be avoided, and user experience is improved.

According to a first aspect, a bandwidth control method is provided. The method may be performed by a SEALDD server, or may be performed by a chip, a chip system, or a circuit configured in a SEALDD server. This is not limited in this application. The following provides descriptions by using an example in which the method is performed by the SEALDD server.

The method may include: The SEALDD server obtains bandwidth limit information from a first server, where the bandwidth limit information includes bandwidth limit information of the first server and/or bandwidth limit information of a first user. The SEALDD server determines, based on the bandwidth limit information, bandwidth allocated to a first SEALDD client, where the first SEALDD client is a client corresponding to the first user. The SEALDD server sends, to the first SEALDD client, information about the bandwidth allocated to the first SEALDD client.

The bandwidth limit information of the first server indicates a bandwidth limit range of the first server, and the bandwidth limit information of the first user indicates a bandwidth limit range of the first user.

According to the method in this embodiment, the first server may provide the bandwidth limit information for the SEALDD server, so that the SEALDD server can allocate the bandwidth to the SEALDD client based on the bandwidth limit information. Because when determining the bandwidth allocated to the first SEALDD client, the SEALDD server considers the bandwidth limit information from the first server, that is, considers a capability of providing bandwidth by the first server, this can avoid port congestion caused by insufficient bandwidth of the first server, and improve user experience.

With reference to the first aspect, in some implementations of the first aspect, the bandwidth limit information of the first server includes total bandwidth limit information of the first server and/or bandwidth limit information that is of a first service and that is provided by the first server. The bandwidth limit information of the first user includes bandwidth limit information that is of the first service and that is provided for the first user.

According to the method in this embodiment, the bandwidth limit information provided by the first server to the SEALDD server may include the bandwidth limit information related to the first service, so that the SEALDD server can determine appropriate bandwidth for the first SEALDD client based on bandwidth of the first service.

With reference to the first aspect, in some implementations of the first aspect, the bandwidth allocated to the first SEALDD client includes bandwidth allocated to the first SEALDD client for transmission of data of the first service.

According to the method in this embodiment, the SEALDD client may determine, based on the bandwidth limit information related to the first service, the bandwidth allocated to the first SEALDD client for transmitting the data of the first service. Therefore, this helps avoid port congestion when the SEALDD client transmits the data of the first service, and improve experience of using the first service by the first user.

In an optional embodiment, the method further includes: The SEALDD server receives second request information from the first SEALDD client, where the second request information may carry information about the first service.

According to the method in this embodiment, the first SEALDD client may send the second request information to the SEALDD server, and may include the information about the first service in the second request information, to request a SEALDD data transmission service and request the SEALDD server to allocate the bandwidth to the first SEALDD client for transmitting the data of the first service. Therefore, the SEALDD server may determine, based on the second request information and based on the bandwidth limit information related to the first service, the bandwidth allocated to the first SEALDD client for transmitting the data of the first service.

With reference to the first aspect, in some implementations of the first aspect, before the SEALDD server determines, based on the bandwidth limit information, the bandwidth allocated to the first SEALDD client, the method further includes: The SEALDD server determines, based on whether a first condition is met, whether to allocate the bandwidth to the first SEALDD client, where the first condition includes: used bandwidth of the first server is less than a first threshold or available bandwidth of the first server is greater than a first threshold.

According to the method in this embodiment, the SEALDD server may determine, based on whether the used bandwidth of the first server is less than a threshold, or whether the available bandwidth of the first server is greater than a threshold, whether to allocate the bandwidth to the first SEALDD client. Therefore, this helps alleviate or avoid port congestion.

With reference to the first aspect, in some implementations of the first aspect, the first condition further includes: available bandwidth that is of the first service and that is provided by the first server is greater than a minimum bandwidth limit that is of the first service and that is provided for the first user.

According to the method in this embodiment, the SEALDD server may further determine, based on whether the available bandwidth that is of the first service and that is provided by the first server is greater than the minimum bandwidth limit that is of the first service and that is provided for the first user, whether to allocate the bandwidth to the first SEALDD client. Therefore, this helps ensure that the first user has sufficient available bandwidth when using the first service, and improve experience of using the first service by the first user.

With reference to the first aspect, in some implementations of the first aspect, that the SEALDD server determines, based on whether a first condition is met, whether to allocate the bandwidth to the first SEALDD client includes: When the first condition is met, the SEALDD server determines to allocate the bandwidth to the first SEALDD client; when the first condition is not met, the SEALDD server rejects to allocate the bandwidth to the first SEALDD client; when the first condition is not met, the SEALDD server determines, based on a priority of the first user, whether to allocate the bandwidth to the first SEALDD client; or when the first condition is not met, the SEALDD server determines, according to a first configuration rule, whether to allocate the bandwidth to the first SEALDD client, where the first configuration rule indicates to allocate the bandwidth to the first SEALDD client based on a priority of the first user when the first condition is not met, or the first configuration rule indicates to reject to allocate the bandwidth to the first SEALDD client when the first condition is not met.

According to the method in this embodiment, the SEALDD server may determine, based on whether the first condition is met, whether to allocate the bandwidth to the first SEALDD client. Therefore, this helps alleviate or avoid port congestion.

With reference to the first aspect, in some implementations of the first aspect, the method further includes: The SEALDD server obtains the first configuration rule from the first server.

According to the method in this embodiment, the first server may provide the first configuration rule for the SEALDD server, and the SEALDD server may determine, according to the first configuration rule from the first server, whether to allocate the bandwidth to the first SEALDD client. Therefore, this helps flexibly formulate a bandwidth control policy based on an actual requirement.

With reference to the first aspect, in some implementations of the first aspect, when the first condition is not met, that the SEALDD server determines, based on the bandwidth limit information, the bandwidth allocated to the first SEALDD client includes: The SEALDD server updates, based on the bandwidth limit information and the priority of the first user, bandwidth allocated by the SEALDD server to a second SEALDD client corresponding to a second user, and determines the bandwidth allocated to the first SEALDD client.

According to the method in this embodiment, when the first condition is not met, if the priority of the first user is relatively high, the SEALDD server may allocate the bandwidth to the first SEALDD client in a manner of updating the bandwidth allocated to the second SEALDD client. This helps fully use bandwidth resources of the first server, to provide services for more users.

With reference to the first aspect, in some implementations of the first aspect, the bandwidth limit information includes the bandwidth limit information of the first user, and that the SEALDD server obtains bandwidth limit information from a first server includes: The SEALDD server sends first request information to the first server, where the first request information carries the information about the first user. The SEALDD server receives the bandwidth limit information of the first user from the first server.

According to the method in this embodiment, the SEALDD server may send the first request information to the first server, and may include the information about the first user in the first request information, so that the first server can send, to the SEALDD server based on the first request information, the bandwidth limit information related to the first user.

With reference to the first aspect, in some implementations of the first aspect, the bandwidth limit information of the first user includes the bandwidth limit information that is of the first service and that is provided for the first user, and the first request information further includes the information about the first service.

According to the method in this embodiment, the SEALDD server may further include the information about the first service in the first request information, so that the first server can send, to the SEALDD server based on the first request information, the bandwidth limit information that is of the first service and that is provided for the first user.

With reference to the first aspect, in some implementations of the first aspect, before the SEALDD server sends the first request information to the first server, the method further includes: The SEALDD server receives the second request information from the first SEALDD client, where the second request information carries the information about the first user and/or the information about the first service.

According to the method in this embodiment, the first SEALDD client may send the second request information to the SEALDD server, and may include the information about the first user and/or the information about the first service in the second request information. The SEALDD server may send the first request information to the first server based on the second request information, to request the first server to send the bandwidth limit information of the first user to the SEALDD server, so that the SEALDD server determines the bandwidth allocated to the first SEALDD client.

With reference to the first aspect, in some implementations of the first aspect, before the SEALDD server sends the first request information to the first server, the method further includes: The SEALDD server receives the second request information from the first SEALDD client through a first port. The SEALDD server determines the information about the first user and/or the information about the first service based on the information from the first port.

According to the method in this embodiment, the SEALDD server may receive the second request information from the first SEALDD client through the first port, and may determine the information about the first user and/or the information about the first service based on the information from the first port. The SEALDD server may send the first request information to the first server based on the second request information, to request the first server to send the bandwidth limit information of the first user to the SEALDD server, so that the SEALDD server determines the bandwidth allocated to the first SEALDD client.

With reference to the first aspect, in some implementations of the first aspect, that the SEALDD server determines, based on the bandwidth limit information, bandwidth allocated to a first SEALDD client includes: The SEALDD server determines, based on the bandwidth limit information and at least one of a priority of the first SEALDD client and quality of service QoS information of the first SEALDD client, the bandwidth allocated to the first SEALDD client.

According to the method in this embodiment, when allocating the bandwidth to the first SEALDD client, the SEALDD server not only considers the bandwidth limit information from the first server, but also may consider at least one of the priority of the first user and the QoS information of the first SEALDD client.

When determining the bandwidth allocated to the first SEALDD client, the SEALDD server considers the priority of the first user corresponding to the first SEALDD client. Therefore, this helps ensure that a high-priority user (or an important user) uses bandwidth resources first. In addition, the SEALDD server may obtain the QoS information of the first SEALDD client, and further learn of quality of a radio channel of UE to which the first SEALDD client belongs. In this way, when determining the bandwidth allocated to the first SEALDD client, the SEALDD server not only considers the bandwidth limit information from the first server, but also can comprehensively consider a current status of the quality of the radio channel of the UE. This helps avoid resource waste caused because the quality of the radio channel of the UE does not match a processing capability of the first server, and implement more accurate bandwidth control.

With reference to the first aspect, in some implementations of the first aspect, the method further includes: The SEALDD server obtains the priority of the first SEALDD client from the first server; and/or the SEALDD server obtains the quality of service QoS information of the first SEALDD client from a core network device.

With reference to the first aspect, in some implementations of the first aspect, the method further includes: The SEALDD server sends, to the first server, the information about the bandwidth allocated to the first SEALDD client.

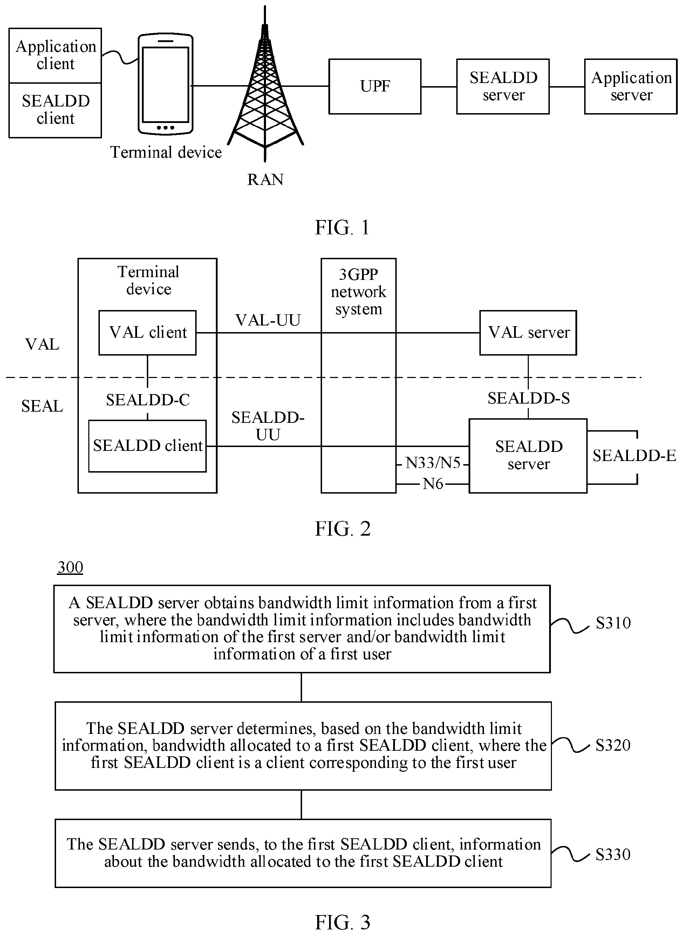

According to the method in this embodiment, the SEALDD server may send, to the first server, the information about the bandwidth allocated to the first SEALDD client, so that the first server can perform bandwidth control based on the bandwidth. For example, the first server may control, based on the bandwidth allocated to the first SEALDD client, a generation rate of a downlink data packet sent to a first client. In a specific example, the first server may be, for example, a VAL server in FIG. 2, the first client may be, for example, a VAL client in FIG. 2, and the first SEALDD client may be, for example, a SEALDD client in FIG. 2. The downlink data packet generated by the first server may be sent to the first client via the SEALDD server and the first SEALDD client.

With reference to the first aspect, in some implementations of the first aspect, after the SEALDD server determines, based on the bandwidth limit information, the bandwidth allocated to the first SEALDD client, the method further includes: The SEALDD server receives the data of the first service from the first SEALDD client. When the used bandwidth of the first server is greater than a second threshold or the available bandwidth of the first server is less than a second threshold, the SEALDD server adjusts, based on a priority of the first service, the bandwidth allocated by the SEALDD server to the first SEALDD client or bandwidth allocated by the SEALDD server to a third SEALDD client, where the third SEALDD client is a client that executes a second service, and the second service is a service other than the first service in services provided by the first server.

In this embodiment, when the used bandwidth of the first server is greater than the second threshold or the available bandwidth of the first server is less than the second threshold, the SEALDD server may adjust, based on the priority of the first service, the bandwidth allocated by the SEALDD server to the first SEALDD client or to the third SEALDD client.

For example, if the priority of the first service is lower than a priority of the second service, or the priority of the first service is lower than a preset second priority value, the SEALDD server may adjust the bandwidth allocated by the SEALDD server to the first SEALDD client. For example, the SEALDD server may reduce bandwidth allocated by the first server to the first SEALDD client, to alleviate or avoid port congestion.

For another example, if the priority of the first service is higher than the priority of the second service, or the priority of the first service is higher than the preset second priority value, the SEALDD server may adjust the bandwidth allocated by the SEALDD server to the third SEALDD client. For example, the SEALDD server may reduce bandwidth allocated by the first server to the third SEALDD client, to alleviate or avoid port congestion.

According to the method in this embodiment, when port congestion occurs, if the priority of the first service is relatively low, the SEALDD server may adjust bandwidth of a SEALDD client that executes the first service, or if the priority of the first service is relatively high, the SEALDD server may adjust bandwidth of a SEALDD client that executes another service. This helps alleviate or avoid port congestion and ensure that a high-priority user preferentially uses bandwidth resources.

With reference to the first aspect, in some implementations of the first aspect, the method further includes: The SEALDD server obtains a second configuration rule, where the second configuration rule indicates to: when the used bandwidth of the first server is greater than the second threshold or the available bandwidth of the first server is less than the second threshold, adjust, based on the priority of the first service, the bandwidth allocated by the SEALDD server to the first SEALDD client or to the third SEALDD client.

According to the method in this embodiment, a manner to be used to control the bandwidth may be indicated by using the second configuration rule. For example, in this embodiment, the second configuration rule may indicate to use, to control the bandwidth, a manner of adjusting the bandwidth allocated by the SEALDD server to the first SEALDD client or to the third SEALDD client. This helps flexibly formulate a bandwidth control policy based on an actual requirement.

With reference to the first aspect, in some implementations of the first aspect, after the SEALDD server determines, based on the bandwidth limit information, the bandwidth allocated to the first SEALDD client, the method further includes: The SEALDD server receives the data of the first service from the first SEALDD client. When the used bandwidth of the first server is greater than a second threshold or the available bandwidth of the first server is less than a second threshold, the SEALDD server discards or caches the data of the first service or data of a second service based on a priority of the first service, where the second service is a service other than the first service in services provided by the first server.

In this embodiment, when the used bandwidth of the first server is greater than the second threshold or the available bandwidth of the first server is less than the second threshold, the SEALDD server may discard or cache the data of the first service or the data of the second service based on the priority of the first service.

For example, if the priority of the first service is lower than the priority of the second service, or the priority of the first service is lower than the preset second priority value, the SEALDD server may discard or cache the data of the first service, to alleviate or avoid port congestion.

For another example, if the priority of the first service is higher than the priority of the second service, or the priority of the first service is higher than the preset second priority value, the SEALDD server may discard or cache the data of the second service, to alleviate or avoid port congestion.

According to the method in this embodiment, when port congestion occurs, if the priority of the first service is relatively low, the SEALDD server may discard or cache the data of the first service, or if the priority of the first service is relatively high, the SEALDD server may discard or cache the data of the second service. This helps alleviate or avoid port congestion and ensure that the high-priority user preferentially uses bandwidth resources.

With reference to the first aspect, in some implementations of the first aspect, the method further includes: The SEALDD server obtains a second configuration rule, where the second configuration rule indicates to: when the used bandwidth of the first server is greater than the second threshold or the available bandwidth of the first server is less than the second threshold, discard or cache the data of the first service or the data of the second service based on the priority of the first service.

According to the method in this embodiment, a manner to be used to control the bandwidth may be indicated by using the second configuration rule. For example, in this embodiment, the second configuration rule may indicate to use, to control the bandwidth, a manner of discarding or caching the data of the first service or the data of second service. This helps flexibly formulate a bandwidth control policy based on an actual requirement.

With reference to the first aspect, in some implementations of the first aspect, the method further includes: The SEALDD server receives the priority of the first service from the first server.

With reference to the first aspect, in some implementations of the first aspect, the method further includes: When the used bandwidth of the first server is less than a third threshold or the available bandwidth of the first server is greater than a third threshold, the SEALDD server sends indication information to the first SEALDD client, where the indication information indicates the first SEALDD client to continue transmission of the data of the first service; or when the used bandwidth of the first server is less than a third threshold or the available bandwidth of the first server is greater than a third threshold, the SEALDD server sends indication information to a third SEALDD client, where the indication information indicates the third SEALDD client to continue transmission of the data of the second service.

For example, if the SEALDD server indicates the first SEALDD client to stop transmitting the data of the first service, when the used bandwidth of the first server is less than the third threshold or the available bandwidth of the first server is greater than the third threshold, the SEALDD server may send the indication information to the first SEALDD client, where the indication information may indicate the first SEALDD client to continue transmission of the data of the first service.

For another example, if the SEALDD server indicates the third SEALDD client to stop transmitting the data of the second service, when the used bandwidth of the first server is less than the third threshold or the available bandwidth of the first server is greater than the third threshold, the SEALDD server may send the indication information to the third SEALDD client, where the indication information may indicate the third SEALDD client to continue transmission of the data of the second service.

According to the method in this embodiment, when the bandwidth resources of the first server are sufficient, the SEALDD server may send the indication information to the first SEALDD client, to indicate the first SEALDD client to continue transmission of the data of the first service; or the SEALDD server may send the indication information to the third SEALDD client, to indicate the third SEALDD client to continue transmission of the data of the second service. Therefore, bandwidth resources can be fully utilized.

According to a second aspect, a bandwidth control method is provided. The method may be performed by an application server (for example, a first server), or may be performed by a chip, a chip system, or a circuit configured in an application server. This is not limited in this application. The following provides descriptions by using an example in which the method is performed by the first server.

The method may include: The first server determines bandwidth limit information, where the bandwidth limit information includes bandwidth limit information of the first server and/or bandwidth limit information of a first user, the bandwidth limit information is used to determine bandwidth allocated to a first service enabler architecture layer data delivery SEALDD client, and the first SEALDD client is a client corresponding to the first user. The first server sends the bandwidth limit information to a SEALDD server.

According to the method in this embodiment, the first server may provide the bandwidth limit information for the SEALDD server, so that the SEALDD server can allocate the bandwidth to the SEALDD client based on the bandwidth limit information. Because when determining the bandwidth allocated to the first SEALDD client, the SEALDD server considers the bandwidth limit information from the first server, that is, considers a capability of providing bandwidth by the first server, this can avoid port congestion caused by insufficient bandwidth of the first server, and improve user experience.

With reference to the second aspect, in some implementations of the second aspect, the bandwidth limit information of the first server includes total bandwidth limit information of the first server and/or bandwidth limit information that is of a first service and that is provided by the first server. The bandwidth limit information of the first user includes bandwidth limit information that is of the first service and that is provided for the first user.

According to the method in this embodiment, the bandwidth limit information provided by the first server to the SEALDD server may include the bandwidth limit information related to the first service, so that the SEALDD server can determine appropriate bandwidth for the first SEALDD client based on bandwidth of the first service.

With reference to the second aspect, in some implementations of the second aspect, the bandwidth allocated to the first SEALDD client includes bandwidth allocated to the first SEALDD client for transmission of data of the first service.

According to the method in this embodiment, the SEALDD client may determine, based on the bandwidth limit information related to the first service, the bandwidth allocated to the first SEALDD client for transmitting the data of the first service. Therefore, this helps avoid port congestion when the SEALDD client transmits the data of the first service, and improve experience of using the first service by the first user.

With reference to the second aspect, in some implementations of the second aspect, the method further includes: The first server sends a first configuration rule to the SEALDD server, where the first configuration rule indicates to allocate the bandwidth to the first SEALDD client based on a priority of the first user when a first condition is not met, or the first configuration rule indicates to reject to allocate the bandwidth to the first SEALDD client when a first condition is not met, and the first condition includes: used bandwidth of the first server is less than a first threshold or available bandwidth of the first server is greater than a first threshold.

According to the method in this embodiment, the first server may provide the first configuration rule for the SEALDD server, and the SEALDD server may determine, according to the first configuration rule from the first server, whether to allocate the bandwidth to the first SEALDD client. Therefore, this helps flexibly formulate a bandwidth control policy based on an actual requirement.

With reference to the second aspect, in some implementations of the second aspect, the first condition further includes: available bandwidth that is of the first service and that is provided by the first server is greater than a minimum bandwidth limit that is of the first service and that is provided for the first user.

With reference to the second aspect, in some implementations of the second aspect, the bandwidth limit information includes the bandwidth limit information of the first user, and that the first server sends the bandwidth limit information to a SEALDD server includes: The first server receives first request information from the SEALDD server, where the first request information carries the information about the first user. The first server sends the bandwidth limit information of the first user to the SEALDD server.

According to the method in this embodiment, the SEALDD server may send the first request information to the first server, and may include the information about the first user in the first request information, so that the first server can send, to the SEALDD server based on the first request information, the bandwidth limit information related to the first user.

With reference to the second aspect, in some implementations of the second aspect, the bandwidth limit information of the first user includes the bandwidth limit information that is of the first service and that is provided for the first user, and the first request information further includes the information about the first service.

According to the method in this embodiment, the SEALDD server may further include the information about the first service in the first request information, so that the first server can send, to the SEALDD server based on the first request information, the bandwidth limit information that is of the first service and that is provided for the first user.

With reference to the second aspect, in some implementations of the second aspect, the method further includes: The first server sends the priority of the first user to the SEALDD server, where the priority of the first user is used to determine the bandwidth allocated to the first SEALDD client.

According to the method in this embodiment, when determining the bandwidth allocated to the first SEALDD client, the SEALDD server considers the priority of the first user corresponding to the first SEALDD client. Therefore, this helps ensure that a high-priority user uses bandwidth resources first.

With reference to the second aspect, in some implementations of the second aspect, the method further includes: The first server receives, from the SEALDD server, information about the bandwidth allocated to the first SEALDD client.

According to the method in this embodiment, the first server may receive, from the SEALDD server, the information about the bandwidth allocated to the first SEALDD client, so that the first server can perform bandwidth control based on the bandwidth. For example, the first server may control, based on the bandwidth allocated to the first SEALDD client, a generation rate of a downlink data packet sent to a first client. In a specific example, the first server may be, for example, a VAL server in FIG. 2, the first client may be, for example, a VAL client in FIG. 2, and the first SEALDD client may be, for example, a SEALDD client in FIG. 2. The downlink data packet generated by the first server may be sent to the first client via the SEALDD server and the first SEALDD client.

With reference to the second aspect, in some implementations of the second aspect, the method further includes: The first server sends a second configuration rule to the SEALDD server, where the second configuration rule indicates to: when the used bandwidth of the first server is greater than a second threshold or the available bandwidth of the first server is less than a second threshold, adjust, based on a priority of the first service, the bandwidth allocated by the SEALDD server to the first SEALDD client or bandwidth allocated by the SEALDD server to a third SEALDD client, where the third SEALDD client is a client that executes a second service, and the second service is a service other than the first service in services provided by the first server.

According to the method in this embodiment, a manner to be used to control the bandwidth may be indicated by using the second configuration rule. For example, in this embodiment, the second configuration rule may indicate to use, to control the bandwidth, a manner of adjusting the bandwidth allocated by the SEALDD server to the first SEALDD client or to the third SEALDD client. This helps flexibly formulate a bandwidth control policy based on an actual requirement.

With reference to the second aspect, in some implementations of the second aspect, the method further includes: The first server sends a second configuration rule to the SEALDD server, where the second configuration rule indicates to: when the used bandwidth of the first server is greater than a second threshold or the available bandwidth of the first server is less than a second threshold, discard or cache the data of the first service or data of a second service based on a priority of the first service, where the second service is a service other than the first service in services provided by the first server.

According to the method in this embodiment, a manner to be used to control the bandwidth may be indicated by using the second configuration rule. For example, in this embodiment, the second configuration rule may indicate to use, to control the bandwidth, a manner of discarding or caching the data of the first service or the data of second service. This helps flexibly formulate a bandwidth control policy based on an actual requirement.

With reference to the second aspect, in some implementations of the second aspect, the method further includes: The first server sends the priority of the first service to the SEALDD server.

According to a third aspect, a bandwidth control method is provided. The method may be performed by a SEALDD server, or may be performed by a chip, a chip system, or a circuit configured in a SEALDD server. This is not limited in this application. The following provides descriptions by using an example in which the method is performed by the SEALDD server.

The method may include: The SEALDD server receives data of a first service from a first SEALDD client. When used bandwidth of a first server is greater than a second threshold or available bandwidth of a first server is less than a second threshold, the SEALDD server adjusts, based on a priority of the first service, bandwidth allocated by the SEALDD server to the first SEALDD client or to a third SEALDD client, or the SEALDD server discards or caches the data of the first service or data of a second service based on a priority of the first service, where the third SEALDD client is a client that executes the second service, and the second service is a service other than the first service in services provided by the first server.

In a possible implementation, when the used bandwidth of the first server is greater than the second threshold or the available bandwidth of the first server is less than the second threshold, the SEALDD server may adjust, based on the priority of the first service, the bandwidth allocated by the SEALDD server to the first SEALDD client or to the third SEALDD client.

For example, if the priority of the first service is lower than a priority of the second service, or the priority of the first service is lower than a preset second priority value, the SEALDD server may adjust the bandwidth allocated by the SEALDD server to the first SEALDD client. For example, the SEALDD server may reduce bandwidth allocated by the first server to the first SEALDD client, to alleviate or avoid port congestion.

For another example, if the priority of the first service is higher than the priority of the second service, or the priority of the first service is higher than the preset second priority value, the SEALDD server may adjust the bandwidth allocated by the SEALDD server to the third SEALDD client. For example, the SEALDD server may reduce bandwidth allocated by the first server to the third SEALDD client, to alleviate or avoid port congestion.

According to the method in this embodiment, when port congestion occurs, if the priority of the first service is relatively low, the SEALDD server may adjust bandwidth of a SEALDD client that executes the first service, or if the priority of the first service is relatively high, the SEALDD server may adjust bandwidth of a SEALDD client that executes another service. This helps alleviate or avoid port congestion and ensure that a high-priority user preferentially uses bandwidth resources.

In another possible implementation, when the used bandwidth of the first server is greater than the second threshold or the available bandwidth of the first server is less than the second threshold, the SEALDD server may discard or cache the data of the first service or the data of the second service based on the priority of the first service.

For example, if the priority of the first service is lower than the priority of the second service, or the priority of the first service is lower than the preset second priority value, the SEALDD server may discard or cache the data of the first service, to alleviate or avoid port congestion.

For another example, if the priority of the first service is higher than the priority of the second service, or the priority of the first service is higher than the preset second priority value, the SEALDD server may discard or cache the data of the second service, to alleviate or avoid port congestion.

According to the method in this embodiment, when port congestion occurs, if the priority of the first service is relatively low, the SEALDD server may discard or cache the data of the first service, or if the priority of the first service is relatively high, the SEALDD server may discard or cache the data of the second service. This helps alleviate or avoid port congestion and ensure that the high-priority user preferentially uses bandwidth resources.

With reference to the third aspect, in some implementations of the third aspect, the method further includes: The SEALDD server obtains a second configuration rule, where the second configuration rule indicates to: when the used bandwidth of the first server is greater than the second threshold or the available bandwidth of the first server is less than the second threshold, adjust, based on the priority of the first service, the bandwidth allocated by the SEALDD server to the first SEALDD client or to the third SEALDD client.

According to the method in this embodiment, a manner to be used to control the bandwidth may be indicated by using the second configuration rule. For example, in this embodiment, the second configuration rule may indicate to use, to control the bandwidth, a manner of adjusting the bandwidth allocated by the SEALDD server to the first SEALDD client or to the third SEALDD client. This helps flexibly formulate a bandwidth control policy based on an actual requirement.

With reference to the third aspect, in some implementations of the third aspect, the method further includes: The SEALDD server obtains a second configuration rule, where the second configuration rule indicates to: when the used bandwidth of the first server is greater than the second threshold or the available bandwidth of the first server is less than the second threshold, discard or cache the data of the first service or the data of the second service based on the priority of the first service.

According to the method in this embodiment, a manner to be used to control the bandwidth may be indicated by using the second configuration rule. For example, in this embodiment, the second configuration rule may indicate to use, to control the bandwidth, a manner of discarding or caching the data of the first service or the data of second service. This helps flexibly formulate a bandwidth control policy based on an actual requirement.

With reference to the third aspect, in some implementations of the third aspect, the method further includes: When the used bandwidth of the first server is less than a third threshold or the available bandwidth of the first server is greater than a third threshold, the SEALDD server sends indication information to the first SEALDD client, where the indication information indicates the first SEALDD client to continue transmission of the data of the first service; or when the used bandwidth of the first server is less than a third threshold or the available bandwidth of the first server is greater than a third threshold, the SEALDD server sends indication information to a third SEALDD client, where the indication information indicates the third SEALDD client to continue transmission of the data of the second service.

For example, if the SEALDD server indicates the first SEALDD client to stop transmitting the data of the first service, when the used bandwidth of the first server is less than the third threshold or the available bandwidth of the first server is greater than the third threshold, the SEALDD server may send the indication information to the first SEALDD client, where the indication information may indicate the first SEALDD client to continue transmission of the data of the first service.

For another example, if the SEALDD server indicates the third SEALDD client to stop transmitting the data of the second service, when the used bandwidth of the first server is less than the third threshold or the available bandwidth of the first server is greater than the third threshold, the SEALDD server may send the indication information to the third SEALDD client, where the indication information may indicate the third SEALDD client to continue transmission of the data of the second service.

According to the method in this embodiment, when the bandwidth resources of the first server are sufficient, the SEALDD server may send the indication information to the first SEALDD client, to indicate the first SEALDD client to continue transmission of the data of the first service; or the SEALDD server may send the indication information to the third SEALDD client, to indicate the third SEALDD client to continue transmission of the data of the second service. Therefore, bandwidth resources can be fully utilized.

With reference to the third aspect, in some implementations of the third aspect, the method further includes: The SEALDD server receives the priority of the first service from the first server.

According to a fourth aspect, a communication apparatus is provided. The apparatus is configured to perform the method in any one of the possible implementations of the first aspect to the third aspect. Specifically, the apparatus may include a unit and/or a module configured to perform the method in any one of the possible implementations of the first aspect to the third aspect, for example, a processing unit and/or a communication unit.

In an implementation, the apparatus is a server (for example, a SEALDD server or a first server). When the apparatus is the server (for example, the SEALDD server or the first server), the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the server (for example, the SEALDD server or the first server). When the apparatus is the chip, the chip system, or the circuit used in the server (for example, the SEALDD server or the first server), the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes at least one processor, configured to execute a computer program or instructions stored in a memory, to perform the method in any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a server (for example, a SEALDD server or a first server).

In another implementation, the apparatus is a chip, a chip system, or a circuit used in the server (for example, the SEALDD server or the first server).

According to a sixth aspect, this application provides a processor, configured to perform the method provided in each of the foregoing aspects.

Operations such as sending and obtaining/receiving related to the processor may be understood as operations such as outputting, receiving, and inputting of the processor unless otherwise specified or if the operations do not conflict with actual functions or internal logic in related descriptions, or may be understood as sending and receiving operations performed by a radio frequency circuit and an antenna. This is not limited in this application.

According to a seventh aspect, a computer-readable storage medium is provided. The computer-readable medium stores program code to be executed by a device, and the program code is used to perform the method in any one of the possible implementations of the first aspect or the third aspect.

According to an eighth aspect, a computer program product including instructions is provided. When the computer program product runs on a computer, the computer is enabled to perform the method in any one of the possible implementations of the first aspect to the third aspect.

According to a ninth aspect, a chip is provided. The chip includes a processor and a communication interface, and the processor reads, through the communication interface, instructions stored in a memory, to perform the method in any one of the implementations of any one of the first aspect to the third aspect.

Optionally, in an implementation, the chip further includes the memory. The memory stores a computer program or the instructions. The processor is configured to execute the computer program or the instructions stored in the memory. When the computer program or the instructions is/are executed, the processor is configured to perform the method in any one of the implementations of any one of the first aspect to the third aspect.

According to a tenth aspect, a chip is provided. The chip includes a logic circuit and a communication interface. The communication interface is configured to: receive to-be-processed data and/or information, and transmit the to-be-processed data and/or information to the logic circuit. The logic circuit is configured to perform the method in any one of the implementations of any one of the first aspect to the third aspect.

### BRIEF DESCRIPTION OF DRAWINGS

FIG. 1 is a schematic diagram of an example of a system architecture applicable to a bandwidth control method in this application;
FIG. 2 is a schematic diagram of a structure of an interface between a service enabler architecture layer and a vertical industry application layer;
FIG. 3 is a schematic diagram of an example of a bandwidth control method according to an embodiment of this application;
FIG. 4 is a schematic diagram of another example of a bandwidth control method according to an embodiment of this application;
FIG. 5 is a schematic flowchart of a bandwidth control method according to an embodiment of this application;
FIG. 6 is another schematic flowchart of a bandwidth control method according to an embodiment of this application;
FIG. 7 is another schematic flowchart of a bandwidth control method according to an embodiment of this application;
FIG. 8 is another schematic flowchart of a bandwidth control method according to an embodiment of this application;
FIG. 9 is a schematic block diagram of a bandwidth control apparatus according to an embodiment of this application; and
FIG. 10 is a schematic block diagram of a communication apparatus according to an embodiment of this application.

### DESCRIPTION OF EMBODIMENTS

The following describes technical solutions of embodiments of this application with reference to accompanying drawings.

The technical solutions provided in this application may be applied to various communication systems, for example, a 5th generation (5th generation, 5G) or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system. A 5G system is used as an example below for description.

FIG. 1 is a schematic diagram of an example of a system architecture applicable to a bandwidth control method in this application. In this system architecture, a service enabler architecture layer (service enabler architecture layer, SEAL) may provide a bandwidth control service for an application client and an application server. For example, the SEAL may include, for example, a service enabler architecture layer data delivery (SEALDD) server (SEALDD server) and a SEALDD client (SEALDD client). The SEALDD client and the application client may be used as a part of a terminal device, and run on the terminal device in a form of software or a system component. The terminal device may communicate with a radio access network (radio access network, RAN). The SEALDD server may be deployed between a user plane function (user plane function, UPF) and an application server in a form of an independent or integrated server. In actual deployment, a plurality of SEALDD servers may alternatively be deployed in a distributed manner based on deployment of the UPF and the application server.

The terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data for a user, for example, a handheld device or a vehicle-mounted device having a wireless connection function. Currently, some examples of the terminal are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a future 5G network, a terminal device in a future evolved public land mobile network (public land mobile network, PLMN), or the like. This is not limited in embodiments of this application.

By way of example, and not limitation, in embodiments of this application, the terminal device may be alternatively a wearable device. The wearable device may also be referred to as a wearable intelligent device and is a generic term for wearable devices that are developed by applying a wearable technology to intelligent designs of daily wear, such as glasses, gloves, watches, clothes, and shoes. The wearable device is a portable device that can be directly worn by a user or integrated into clothes or an accessory of a user. The wearable device is not merely a hardware device, but is used to implement a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In embodiments of this application, an apparatus configured to implement a function of the terminal device may be a terminal device, or may be an apparatus, for example, a chip system or a chip, that can support the terminal device in implementing the function. The apparatus may be deployed on the terminal device. In embodiments of this application, the chip system may include a chip, or may include a chip and another discrete component.

It should be understood that a specific form of the terminal device is not specially limited in embodiments of this application, and this is merely an example for description herein.

It should be understood that FIG. 2 is merely a simplified schematic diagram of an example for ease of understanding. The communication system may further include another device and/or network element, which is not shown in FIG. 2.

In this application, the application client may be, for example, a vertical industry application layer (vertical application layer, VAL) client (VAL client), and the application server may be, for example, a VAL server (VAL server). For ease of understanding, the following uses an example in which the application client is a VAL client and the application server is a VAL server for description.

FIG. 2 shows a schematic diagram of a structure of an interface between a service enabler architecture layer (SEAL) and a vertical industry application layer (VAL). A VAL client and a SEALDD client may be deployed on a terminal device. As shown in FIG. 2, the SEALDD client may communicate with the VAL client through a SEALDD-C interface, and a SEALDD server may communicate with a VAL server through a SEALDD-S interface. User plane data transmission may be performed between the SEALDD client and the SEALDD server through a SEALDD-UU interface. The SEALDD-UU interface is carried on a user plane session constructed by a 3rd generation partnership project (3rd generation partnership project, 3GPP) network system. SEALDD servers may communicate with each other through a SEALDD-E interface, for example, perform control plane context transmission and user plane data forwarding.

As shown in FIG. 2, the SEALDD server may further communicate with the 3GPP network system through an N33/N5 interface. Specifically, the SEALDD server may perform control plane message communication with a policy control function (policy control function, PCF) through the N33/N5 interface, to send an application function (application function, AF) request or make a notification subscription to a 5G core (5G core, 5GC). In addition, the SEALDD server may further perform user plane data transmission with a UPF through an N6 interface.

In the schematic diagram of the structure of the interface between the SEAL and the VAL shown in FIG. 2, when user plane data is transmitted, for uplink data transmission, the VAL client first sends an application data packet to the SEALDD client, the SEALDD client may encapsulate the received data packet and send an encapsulated data packet to the SEALDD server, and then the SEADD server parses the data packet and sends the data packet to the VAL server. Accordingly, for downlink data transmission, data sent by the VAL server may be finally sent to the VAL client via the SEALDD server and the SEALDD client.

In a process in which an application server (for example, the VAL server) provides a service for a user, different users occupy different bandwidth resources, and different services also occupy different bandwidth resources. The application server has a limited processing capability and limited bandwidth resources. Therefore, bandwidth needs to be properly controlled to enable different users to use the bandwidth resources more fairly, improve service experience of most users, and avoid port congestion.

A flow control technology is a basic function of the Ethernet, and can prevent frame loss in a case of port congestion. Currently, a common flow control technology includes a layer-4 flow control technology. In the layer-4 flow control technology, for a transport layer data flow that exceeds a limit, a manner of discarding a data packet at a bandwidth control point is used to trigger bandwidth adjustment at a transport layer. This manner may seriously affect total bandwidth of the data flow. For example, a bandwidth upper limit is set to 10 Mbps for an application data flow. When the data flow reaches 11 Mbps, a redundant data packet is discarded. Because of data packet loss, a transmit window at a transport layer is sharply reduced and then slowly increased. That transmission resources at the transport layer cannot be fully utilized may be caused in this implementation. As a result, final average traffic of the application data flow is only 1/2 of 10 Mbps or even lower, causing resource waste.

In view of this, this application provides a method and an apparatus for controlling bandwidth at a service enabler architecture layer (SEAL), to avoid resource waste caused by packet loss at a bandwidth control point at a transport layer. In this method, a first server (for example, a VAL server) may provide bandwidth limit information for a SEALDD server, and the SEALDD server may determine, based on the bandwidth limit information, bandwidth allocated to a SEALDD client (for example, a first SEALDD client). When determining the bandwidth allocated to the SEALDD client, the SEALDD server considers the bandwidth limit information from the first server, that is, considers a capability of providing bandwidth by the first server. Therefore, this helps avoid port congestion caused by insufficient bandwidth of the first server, and improves user experience. In addition, in the solution of this application, bandwidth control is performed at a layer (such as a SEAL) above a transport layer. This can avoid packet loss at the transport layer, to avoid impact on data packet sending at the transport layer, for example, avoid a case in which an average rate at the transport layer decreases.

The following describes in detail the bandwidth control method provided in embodiments of this application with reference to the accompanying drawings. The bandwidth control method provided in embodiments of this application may be applied to the system architecture shown in FIG. 1. The first server may be, for example, the VAL server.

FIG. 3 is a schematic diagram of an example of a bandwidth control method according to an embodiment of this application. The method 300 may include S310 to S330.

S310. A SEALDD server obtains bandwidth limit information from a first server, where the bandwidth limit information includes bandwidth limit information of the first server and/or bandwidth limit information of a first user.

The bandwidth limit information may be used to determine bandwidth allocated to a first SEALDD client. In this embodiment, the first server may determine the bandwidth limit information and provide the bandwidth limit information for the SEALDD server. For example, the first server may determine the bandwidth limit information based on, for example, capabilities of the first server for processing a data flow and providing bandwidth, subscription information with one or more users, and the like.

In this embodiment, limiting bandwidth may also be understood as limiting data traffic. The bandwidth limit information may also be referred to as traffic limit information, data flow limit information, or the like.

In a possible manner, the bandwidth limit information may include the bandwidth limit information of the first server and/or the bandwidth limit information of the first user. The bandwidth limit information of the first user may include, for example, a bandwidth upper limit (a maximum bandwidth limit) and a bandwidth lower limit (a minimum bandwidth limit) of the first user. In an optional embodiment, the first user may be a user of a type of users (for example, denoted as a first user group). In this case, the bandwidth limit information of the first user may be bandwidth limit information of the first user group.

Optionally, the bandwidth limit information of the first server includes total bandwidth limit information of the first server and/or bandwidth limit information that is of a first service and that is provided by the first server. The bandwidth limit information of the first user may include bandwidth limit information that is of the first service and that is provided for the first user. The bandwidth limit information that is of the first service and that is provided for the first user may include, for example, a bandwidth upper limit and a bandwidth lower limit that are of the first service and that are provided for the first user.

It should be noted that the first user and the first service are merely examples to facilitate understanding of this embodiment. Actually, the first server may provide bandwidth limit information of one or more users, and may provide bandwidth limit information of one or more services. The first user may be, for example, one of the one or more users, and the first service may be, for example, one of the one or more services. Optionally, the first server may further provide bandwidth limit information of one or more user groups, and the first user group may be, for example, one of the one or more user groups.

For example, the SEALDD server may obtain the bandwidth limit information from the first server in the following manners.

For example, the bandwidth limit information includes the bandwidth limit information of the first server. In this case, a manner in which the SEALDD server obtains the bandwidth limit information from the first server is: For example, the first server sends the bandwidth limit information of the first server to the SEALDD server, and correspondingly, the SEALDD server receives the bandwidth limit information from the first server.

For another example, the bandwidth limit information includes the bandwidth limit information of the first user. In this case, a manner in which the SEALDD server obtains the bandwidth limit information from the first server includes, for example, Manner 1 and Manner 2.

Manner 1: The SEALDD server sends first request information to the first server, where the first request information carries information about the first user. The first server sends the bandwidth limit information of the first user to the SEALDD server based on the first request information. Correspondingly, the SEALDD server receives the bandwidth limit information of the first user from the first server.

Manner 2: The first server may actively send the bandwidth limit information of the first user to the SEALDD server.

For still another example, the bandwidth limit information includes the bandwidth limit information of the first server and the bandwidth limit information of the first user. In this case, a manner in which the SEALDD server obtains the bandwidth limit information from the first server includes, for example, Manner 1 and Manner 2.

Manner 1: The SEALDD server receives the bandwidth limit information of the first server and the bandwidth limit information of the first user from the first server at the same time. Receiving at the same time may also be understood as receiving by using a same piece of signaling.

Manner 2: The SEALDD server receives the bandwidth limit information of the first server and the bandwidth limit information of the first user by using different signaling respectively. In an optional embodiment, Manner 2 includes the following steps.

Step 1. The SEALDD server receives the bandwidth limit information of the first server.

Step 2. The SEALDD server sends first request information to the first server, where the first request information may request the first server to send the bandwidth limit information of the first user to the SEALDD server.

For example, the first request information may carry information about the first user. The information about the first user may include, for example, one or more of the following information: identifier (ID) information of UE corresponding to the first user, identifier information of a user group to which the first user belongs, a type of the first user, an address section of the UE corresponding to the first user, and an IP address of the first SEALDD client. Optionally, the first request information further carries information about the first service provided by the first server. In this case, the first request information may request the first server to send, to the SEALDD server, the bandwidth limit information that is of the first service and that is provided for the first user.

Step 3. The first server sends the bandwidth limit information of the first user to the SEALDD server based on the first request information. Correspondingly, the SEALDD server receives the bandwidth limit information of the first user from the first server.

In a possible case, the information about the first user includes the identifier information of the UE corresponding to the first user. In this case, the first server may determine the bandwidth limit information of the first user based on an identifier of the UE, and send the bandwidth limit information of the first user to the SEALDD server.

In another possible case, the information about the first user includes one or more of the following information: the identifier information of the user group to which the first user belongs, the type of the first user, an address section corresponding to the first user, and the IP address of the first SEALDD client. In this case, the SEALDD server may determine the type of the first user based on the information about the first user, determine bandwidth limit information of a user of this type based on this type, and then send the bandwidth limit information of the user of this type to the SEALDD server. The bandwidth limit information of the user of this type may be used as the bandwidth limit information of the first user.

Optionally, if the first request information carries the information about the first service, the bandwidth limit information of the first user that is sent by the first server to the SEALDD server may include the bandwidth limit information that is of the first service and that is provided for the first user.

Optionally, before step 2, Manner 2 further includes: The SEALDD server receives second request information from the first SEALDD client. The second request information may request to establish a connection to the SEALDD server, or request a SEALDD data transmission service.

In an implementation, the first SEALDD client may include the information about the first user and/or the information about the first service in the second request information. The information about the first user may include, for example, one or more of the following information: the identifier (ID) information of the UE corresponding to the first user, the identifier information of the user group to which the first user belongs, the type of the first user, the address section of the UE corresponding to the first user, and the IP address of the first SEALDD client. When the second request information carries the information about the first service, the second request information may be service request information for the first service, requests the SEALDD data transmission service, and requests the SEALDD server to allocate, to the first SEALDD client, bandwidth for transmission of data of the first service.

In another implementation, the SEALDD server may receive the second request information from the first SEALDD client through a first port, so that the SEALDD server can determine the information about the first user and/or the information about the first service based on information from the first port. For example, the SEALDD server may obtain the information from the first port by parsing a data packet header of the second request information, and further determine the information about the first user and/or the information about the first service based on the information from the first port. The information about the first user may include, for example, one or more of the following information: the IP address of the first SEALDD client, the type of the first user, and the address section of the UE corresponding to the first user. In this implementation, the second request information may be a user plane connection establishment request sent by the first SEALDD client to the SEALDD server. When the information about the first service may be determined based on the information from the first port, the second request information may request to establish the connection to the SEALDD server, and further request the SEALDD server to allocate, to the first SEALDD client, the bandwidth for transmitting the data of the first service.

S320. The SEALDD server determines, based on the bandwidth limit information, the bandwidth allocated to the first SEALDD client, where the first SEALDD client is a client corresponding to the first user.

That the first SEALDD client is a client corresponding to the first user may also be understood as that the first SEALDD client is a client that provides a SEALDD service for the first user.

In this embodiment, bandwidth allocated to a client (for example, the first SEALDD client) may be understood as a bandwidth upper limit allocated to the client.

Optionally, when the bandwidth limit information of the first user includes bandwidth limit information that is of the first service and that is provided for the first user, the bandwidth allocated to the first SEALDD client may include the bandwidth allocated to the first SEALDD client for transmitting the data of the first service. In this case, before the SEALDD server allocates the bandwidth to the first SEALDD client, the method 300 may further include: The SEALDD server receives the second request information from the first SEALDD client, where the second request information may carry the information about the first service.

In S320, the SEALDD server may determine, based on the bandwidth limit information, the bandwidth allocated to the first SEALDD client. For example, the SEALDD server may determine, based on the bandwidth limit information, a range of the bandwidth that can be allocated to the first SEALDD client, to determine the bandwidth allocated to the first SEALDD client.

In a first implementation, the SEALDD server may determine, based on the bandwidth limit information of the first server, the bandwidth allocated to the first SEALDD client.

For example, the bandwidth limit information of the first server includes the total bandwidth limit information of the first server, and the SEALDD server may determine available bandwidth of the first server based on the total bandwidth limit information of the first server and currently used bandwidth of the first server. The SEALDD server may determine, within a range of the available bandwidth of the first server, the bandwidth allocated to the first SEALDD client. That is, the range of the available bandwidth may be used as the range of the bandwidth that can be allocated to the first SEALDD client. The currently used bandwidth of the first server may be obtained, for example, through detection by the SEALDD server. For example, it is assumed that the available bandwidth of the first server is 100 Mbps. The SEALDD server may determine, within a range of 100 Mbps, the bandwidth that can be allocated to the first SEALDD client.

For another example, the bandwidth limit information of the first server includes the bandwidth limit information that is of the first service and that is provided by the first server, and the first SEALDD client may determine available bandwidth of the first service based on the bandwidth limit information of the first service and currently used bandwidth of the first service. Therefore, the SEALDD server may determine, within a range of the available bandwidth of the first service, the bandwidth allocated to the first SEALDD client for transmitting the data of the first service. That is, the range of the available bandwidth of the first service may be used as the range of the bandwidth that can be allocated to the first SEALDD client for transmitting the data of the first service. The currently used bandwidth of the first service may be obtained, for example, through detection by the SEALDD server. For example, it is assumed that the available bandwidth of the first service is 50 Mbps. The first SEALDD client may determine, within a range of 50 Mbps, the bandwidth allocated to the first SEALDD client for transmitting the data of the first service.

It should be understood that, in this embodiment, the available bandwidth may also be understood as unused bandwidth, unoccupied bandwidth, or idle bandwidth.

In a second implementation, the SEALDD server may determine, based on the bandwidth limit information of the first user, the bandwidth allocated to the first SEALDD client.

For example, the bandwidth limit information of the first user includes, for example, the bandwidth upper limit and the bandwidth lower limit of the first user. The SEALDD server may determine, within a range from the bandwidth upper limit to the bandwidth lower limit, the bandwidth that can be allocated to the first SEALDD client. That is, the range from the bandwidth upper limit to the bandwidth lower limit may be used as the range of the bandwidth that can be allocated to the first SEALDD client. For example, it is assumed that the upper bandwidth limit and the lower bandwidth limit that can be allocated by the first server to the first user are respectively 20 Mbps and 70 Mbps. The first SEALDD client may determine, within a range from 20 Mbps to 70 Mbps, the bandwidth allocated to the first SEALDD client.

For another example, the bandwidth limit information of the first user includes, for example, the bandwidth limit information that is of the first service and that is provided for the first user. For example, the bandwidth limit information that is of the first service and that is provided for the first user may include the bandwidth upper limit and the bandwidth lower limit that are of the first service and that are provided for the first user. The SEALDD server may determine, within a range from the bandwidth upper limit to the bandwidth lower limit, the bandwidth allocated to the first SEALDD client for transmitting the data of the first service. That is, the range from the bandwidth upper limit to the bandwidth lower limit may be used as the range of the bandwidth that can be allocated to the first SEALDD client for transmitting the data of the first service. For example, it is assumed that the upper bandwidth limit and the lower bandwidth limit that are of the first service and that are provided for the first user are respectively 10 Mbps and 30 Mbps. The first SEALDD client may determine, within a range from 10 Mbps to 30 Mbps, the bandwidth allocated to the first SEALDD client for transmitting the data of the first service.

It should be understood that, in the foregoing several implementations, a specific value of the bandwidth is merely an example for description for ease of understanding of this embodiment of this application, and does not constitute any limitation on the protection scope of this application.

It should be further understood that the SEALDD server may also determine, in the foregoing manner, bandwidth allocated to another SEALDD client (for example, a second SEALDD client corresponding to a second user).

According to the method in this embodiment, the first server may provide the bandwidth limit information for the SEALDD server, so that the SEALDD server can allocate the bandwidth to the SEALDD client based on the bandwidth limit information. Because when determining the bandwidth allocated to the first SEALDD client, the SEALDD server considers the bandwidth limit information from the first server, that is, considers a capability of providing bandwidth by the first server, this can avoid port congestion caused by insufficient bandwidth of the first server, and improve user experience.

Optionally, that the SEALDD server determines, based on the bandwidth limit information, the bandwidth allocated to the first SEALDD client includes: The SEALDD server determines, based on the bandwidth limit information from the first server and at least one of a priority of the first user and quality of service QoS information of the first SEALDD client, the bandwidth allocated to the first SEALDD client. That is, when allocating the bandwidth to the first SEALDD client, the SEALDD server not only considers the bandwidth limit information from the first server, but also may consider at least one of the priority of the first user and the quality of service QoS information of the first SEALDD client. Optionally, when the first user belongs to a user group, the priority of the first user may include a priority of the user group to which the first user belongs.

In a first implementation, the SEALDD server may determine, based on the priority of the first user and the bandwidth limit information from the first server, the bandwidth allocated to the first SEALDD client.

For example, if the priority of the first user is high, the SEALDD server may allocate high bandwidth to the first SEALDD client within the range of the bandwidth that is determined based on the bandwidth limit information and that can be allocated to the first SEALDD client. If the priority of the first user is low, the SEALDD server may allocate low bandwidth to the first SEALDD client within the range of the bandwidth that is determined based on the bandwidth limit information and that can be allocated to the first SEALDD client. For example, it is assumed that the range of the bandwidth that is determined based on the bandwidth limit information and that can be allocated to the first SEALDD client is 10 Mbps to 50 Mbps. If the first user is a user of a highest priority, the bandwidth allocated by the SEALDD server to the first SEALDD client may be, for example, 50 Mbps. Alternatively, the SEALDD server may determine, according to a predefined rule, the bandwidth allocated to the first SEALDD client. This is not limited in this application.

For another example, the SEALDD server may update, based on the bandwidth limit information and the priority of the first user, bandwidth allocated to the second SEALDD client corresponding to the second user, to determine the bandwidth allocated to the first SEALDD client. For example, it is assumed that the second client has accessed the first server. If the priority of the first user is higher than a priority of the second user, or if the priority of the first user is higher than a preset first priority value, the SEALDD server may update, based on the bandwidth limit information, the bandwidth allocated to the second client. For example, the SEALDD server may reduce, based on a range of bandwidth that is determined based on the bandwidth limit information and that can be allocated to the second SEALDD client, the bandwidth allocated to the second client, to increase the currently available bandwidth of the first server. Further, the SEALDD server may determine, within a range of updated available bandwidth and based on the range of the bandwidth that is determined based on the bandwidth limit information and that can be allocated to the first SEALDD client, the bandwidth allocated to the first SEALDD client.

For another example, the SEALDD server may obtain a policy (policy) or indication information related to bandwidth allocation. The policy or indication information may indicate a rule for allocating bandwidth to SEALDD clients corresponding to users of different priorities. For example, the policy or indication information may indicate that bandwidth allocated to a SEALDD client corresponding to a user of a second priority may be reduced, to allocate bandwidth to a SEALDD client corresponding to a user of a first priority. For example, it is assumed that the priority of the first user is the first priority. The SEALDD server may reduce, based on the priority of the first user and the policy or the indication information, the bandwidth allocated to the SEALDD client corresponding to the user whose priority is the second priority, to increase the currently available bandwidth of the first server. Further, the SEALDD server may determine, within a range of updated available bandwidth and based on the range of the bandwidth that is determined based on the bandwidth limit information and that can be allocated to the first SEALDD client, the bandwidth allocated to the first SEALDD client.

For another example, the priority of the first user includes a priority of the user group to which the first user belongs, and the SEALDD server may determine, based on the priority of the user group to which the first user belongs and the bandwidth limit information, the bandwidth allocated to the first SEALDD client. For example, it is assumed that the first user belongs to the first user group. If the priority of the first user group is higher than a priority of a second user group, or if the priority of the first user group is higher than a preset priority value, the SEALDD server may reduce bandwidth allocated to a SEALDD client corresponding to a user in the second user group, to increase the currently available bandwidth of the first server. Further, the SEALDD server may determine, within the range of the updated available bandwidth and based on the range of the bandwidth that is determined based on the bandwidth limit information and that can be allocated to the first SEALDD client, the bandwidth allocated to the first SEALDD client.

In this embodiment, a manner in which the SEALDD server obtains the priority of the first user is: For example, the first server sends the priority of the first user to the SEALDDD server, and correspondingly, the SEALDD server receives the priority of the first user from the first server.

According to the method in this embodiment, when determining the bandwidth allocated to the first SEALDD client, the SEALDD server considers the priority of the first user corresponding to the first SEALDD client. Therefore, this helps ensure that a high-priority user (or an important user) uses bandwidth resources first.

In a second implementation, the SEALDD server may determine, based on the QoS information of the first SEALDD client and the bandwidth limit information from the first server, the bandwidth allocated to the first SEALDD client.

The QoS information of the first SEALDD client may reflect quality of a radio channel of UE to which the first SEALDD client belongs. For example, the QoS information of the first SEALDD client may include, for example, one or more of the following information: a guaranteed flow bit rate (guaranteed flow bit rate, GFBR) and/or a maximum flow bit rate (maximum flow bit rate, MFBR) of a session or a QoS flow (QoS flow) currently used for a SEALDD service, a QoS monitoring (QoS monitoring) result of the session or the QoS flow, and network status information collected by a network data analytics function (network data analytics function, NWDAF) through statistics.

In this implementation, the SEALDD server may learn of, based on the QoS information of the first SEALDD client, the quality of the radio channel of the UE to which the first SEALDD client belongs, so that the SEALDD server can determine, based on a current status of the quality of the radio channel of the UE, the bandwidth allocated to the first SEALDD client. For example, when the quality of the channel of the UE to which the first SEALDD client belongs is high, the SEALDD server may allocate high bandwidth to the first SEALDD client within the range of the bandwidth that is determined based on the bandwidth limit information and that can be allocated to the first SEALDD client. When the quality of the channel of the UE to which the first SEALDD client belongs is low, the SEALDD server may allocate low bandwidth to the first SEALDD client within the range of the bandwidth that is determined based on the bandwidth limit information and that can be allocated to the first SEALDD client.

For example, the QoS information of the first SEALDD client includes the MFBR of the session or the QoS flow currently used for the SEALDD service. It is assumed that a value of the MFBR is 20 Mbps, and the range of the bandwidth that is determined based on the bandwidth limit information and that can be allocated to the first SEALDD client is 10 Mbps to 40 Mbps, the bandwidth that is determined by the SEALDD server and that is allocated to the first SEALDD client may be 20 Mbps, to avoid resource waste.

For another example, the QoS information of the first SEALDD client includes the QoS monitoring result of the session or the QoS flow currently used for the SEALDD service. Therefore, the SEALDD server may obtain, by using the QoS monitoring result, delay information of the UE to which the first SEALDD client belongs. It is assumed that a current delay of the UE is high, and it may be considered that a current network status of the UE is poor. Therefore, the SEALDD server may allocate low bandwidth to the first SEALDD client within the range of the bandwidth that is determined based on the bandwidth limit information and that can be allocated to the first SEALDD client, for example, allocates minimum bandwidth within the range to the first SEALDD client.

In this embodiment, a manner in which the SEALDD server obtains the QoS information of the first SEALDD client is: For example, a core network device sends the QoS information of the first SEALDD client to the SEALDDD server, and correspondingly, the SEALDD server receives the QoS information of the first SEALDD client from the core network device.

In an existing layer-4 flow control technology, because a status of the radio channel of the UE cannot be learned of, a case in which the status of the radio channel of the UE does not match a processing capability of an application server may occur during flow control. For example, the application server classifies UE as a high-priority user, and sets a bandwidth upper limit of the UE to 50 Mbps. However, because an air interface channel of the UE is poor, data transmission of only 20 Mbps is supported, causing waste of processing resources of the application server. For another example, the status of the radio channel of the UE is good. Therefore, the UE sends a large quantity of data packets to the application server. However, because bandwidth resources of the application server are limited, data packets cannot be all processed, and some data packets can only be discarded.

According to the method in this embodiment, the SEALDD server may obtain the QoS information of the first SEALDD client via the core network device, and further learn of the quality of the radio channel of the UE to which the first SEALDD client belongs. In this way, when determining the bandwidth allocated to the first SEALDD client, the SEALDD server not only considers the bandwidth limit information from the first server, but also can comprehensively consider a current status of the quality of the radio channel of the UE. This helps avoid resource waste caused because the quality of the radio channel of the UE does not match a processing capability of the first server, and implement more accurate bandwidth control.

In a third implementation, the SEALDD server may determine, based on the priority of the first user, the QoS information of the first SEALDD client, as well as the bandwidth limit information from the first server, the bandwidth allocated to the first SEALDD client. For example, it is assumed that a range of the bandwidth that is determined based on the bandwidth limit information and that can be allocated to the first SEALDD client is a first range interval, a range of the bandwidth that is determined based on the priority of the first user and that can be allocated to the first SEALDD client is a second range interval, and a range of the bandwidth that is determined based on the QoS information of the first SEALDD client and that can be allocated to the first SEALDD client is a third range interval. The bandwidth that is determined by the SEALDD server and that is allocated to the first SEALDD client may be, for example, specific bandwidth in an intersection of the first range interval, the second range interval, and the third range interval.

Optionally, that the SEALDD server determines, based on the bandwidth limit information, the bandwidth allocated to the first SEALDD client includes: The SEALDD server determines, based on the bandwidth limit information and bandwidth requirement information of the first user, the bandwidth allocated to the first SEALDD client. That is, when allocating the bandwidth to the first SEALDD client, the SEALDD server not only considers the bandwidth limit information from the first server, but also may consider a bandwidth requirement of the first user. This helps improve user experience.

In an implementation, the first SEALDD client may send the bandwidth requirement information of the first user to the SEALDD server. The bandwidth requirement information may indicate bandwidth required by the first user, so that the SEALDD server can determine, based on the bandwidth required by the first user and within the range of bandwidth that is determined based on the bandwidth limit information and that can be allocated to the first SEALDD client, the bandwidth allocated to the first SEALDD client. For example, if the bandwidth required by the first user is 30 Mbps, and the range of the bandwidth that is determined based on the bandwidth limit information and that can be allocated to the first SEALDD client is 10 Mbps to 40 Mbps, the bandwidth that is determined by the SEALDD server and that is allocated to the first SEALDD client may be 30 Mbps.

Optionally, before the SEALDD server determines, based on the bandwidth limit information, the bandwidth allocated to the first SEALDD client, the method 300 further includes: The SEALDD server determines, based on whether a first condition is met, whether to allocate the bandwidth to the first SEALDD client.

For example, the first condition may include: For example, the used bandwidth of the first server is less than a first threshold. Optionally, the first condition may further include one or more of the following: (1) Used bandwidth that is of the first service and that is provided by the first server is less than a fourth threshold; (2) Available bandwidth that is of the first service and that is provided by the first server is greater than a minimum bandwidth limit that is of the first service and that is provided for the first user; (3) The first SEALDD client can use (execute) the first service. That the first SEALDD client can use the first service may also be understood as that the first SEALDD client has permission to use the first service. Whether the first SEALDD client can use the first service may be determined based on information related to subscription between the SEALDD server and the first server.

That the used bandwidth of the first server is less than the first threshold may also be described as that the available bandwidth of the first server is greater than a threshold. For example, when total bandwidth of the first server is 100 Mbps, if the used bandwidth of the first server is less than 40 Mbps, it may also be described as that the available bandwidth of the first server is greater than 60 Mbps. Similarly, that the used bandwidth of the first service is less than the fourth threshold may also be described as that the available bandwidth of the first service is greater than a threshold.

The first threshold and the fourth threshold may be fixed values predefined in a protocol, may be values generated according to a predefined rule, may be preconfigured fixed values, or may be dynamically configured values. The SEALDD server may store the first threshold and/or the fourth threshold in advance, or the first threshold and/or the fourth threshold may be notified to the SEALDD server via another device. In an optional example, if the condition is described as that the used bandwidth of the first server is less than the first threshold, the first threshold may be, for example, the total bandwidth of the first server, or may be bandwidth less than the total bandwidth of the first server. In an optional example, if the condition is described as that the used bandwidth of the first service is less than the fourth threshold, the fourth threshold may be, for example, the bandwidth of the first service, or may be bandwidth less than the bandwidth of the first service. Optionally, the first threshold and/or the fourth threshold may be carried, for example, in the bandwidth limit information from the first server.

It should be understood that when the first condition includes a plurality of conditions, if the plurality of conditions are met at the same time, it indicates that the first condition is met. If one of the plurality of conditions is not met, it indicates that the first condition is not met.

It should be further understood that in some scenarios, "greater than" in the first condition may alternatively be replaced with "greater than or equal to", and "less than" may alternatively be replaced with "less than or equal to". In this embodiment, "greater than" and "less than" are only used as examples for description.

According to the method in this embodiment, the SEALDD server may determine, based on whether the first condition is met, whether to allocate the bandwidth to the first SEALDD client. Therefore, this helps alleviate or avoid port congestion. In this embodiment, determining whether to allocate the bandwidth to the first SEALDD client may also be understood as determining whether to establish a connection to the SEALDD client, and further allocate the bandwidth to the first SEALDD client.

For example, the SEALDD server determines, based on whether the first condition is met, whether to allocate the bandwidth to the first SEALDD client. There may be a plurality of cases. The following uses four cases as examples for description.

Case 1: When the first condition is met, the SEALDD server determines to allocate the bandwidth to the first SEALDD client. In this embodiment, determining to allocate the bandwidth to the first SEALDD client may also be understood as determining to establish the connection to the SEALDD client, and further allocate the bandwidth to the first SEALDD client. In this case, the SEALDD server may determine, based on the bandwidth limit information from the first server, the bandwidth allocated to the first SEALDD client.

Case 2: When the first condition is not met, the SEALDD server rejects to allocate the bandwidth to the first SEALDD client. In this embodiment, rejecting to allocate the bandwidth to the first SEALDD client may also be understood as rejecting to establish the connection to the SEALDD client, and further rejecting to allocate the bandwidth to the first SEALDD client.

For example, after receiving the second request information from the first SEALDD client, if the first condition is not met, the SEALDD server may send a reject message to the first SEALDD client. The reject message may carry, for example, a pending time. Further, the first SEALDD client may re-send the second request information to the SEALDD server after the pending time ends. Optionally, after the SEALDD server sends the reject message to the first SEALDD client, when the first condition can be met, the first SEALDD client may send indication information (a bandwidth available notification) to the SEALDD server, to indicate the first SEALDD client to re-send the second request information to the SEALDD server.

Case 3: When the first condition is not met, the SEALDD server determines, based on the priority of the first user, whether to allocate the bandwidth to the first SEALDD client. For example, it is assumed that the second client corresponding to the second user has accessed the first server. If the priority of the first user is higher than the priority of the second user, or if the priority of the first user is higher than the preset first priority value, the SEALDD server determines to allocate the bandwidth to the first SEALDD client.

In this case, the SEALDD server may update, based on the bandwidth limit information and the priority of the first user, the bandwidth allocated by the SEALDD server to the second SEALDD client, to determine the bandwidth allocated to the first SEALDD client. For example, if the priority of the second user is lower than the priority of the first user, the SEALDD server may update, based on the bandwidth limit information, the bandwidth allocated to the second client corresponding to the second user. For example, the SEALDD server may reduce, based on the range of the bandwidth that is determined based on the bandwidth limit information and that can be allocated to the second SEALDD client, the bandwidth allocated to the second client, to increase the currently available bandwidth of the first server. Further, the SEALDD server may determine, within the range of the updated available bandwidth and based on the range of the bandwidth that is determined based on the bandwidth limit information and that can be allocated to the first SEALDD client, the bandwidth allocated to the first SEALDD client.

For ease of understanding, the following uses a specific example for description. It is assumed that the total bandwidth of the first server is 100 Mbps, where the bandwidth allocated to the second SEALDD client is 70 Mbps. In this case, if the priority of the first user is higher than the priority of the second user, or if the priority of the first user is higher than the preset first priority value, the SEALDD server may update the bandwidth allocated to the second SEALDD client, for example, may update the bandwidth allocated to the second client to 60 Mbps. Therefore, the currently available bandwidth of the first server is at least 40 Mbps. Further, the SEALDD server may determine, within a range of 40 Mbps and based on the range of the bandwidth that is determined based on the bandwidth limit information and that can be allocated to the first SEALDD client, the bandwidth allocated to the first SEALDD client.

It may be understood that, in the foregoing example, the "total bandwidth of the first server" may also be replaced with the "bandwidth of the first service". In this case, the bandwidth allocated to the first SEALDD client and the second SEALDD client may be bandwidth allocated to the first SEALDD client and the second SEALDD client for transmitting the data of the first service.

In a possible implementation, before updating the bandwidth allocated to the second SEALDD client, the SEALDD server may suspend a request corresponding to the second request information of the first SEALDD client, and after completing the update, the SEALDD server may determine the bandwidth allocated to the first SEALDD client, and feeds back a response to the first SEALDD client.

In another possible implementation, before updating the bandwidth allocated to the second SEALDD client, the SEALDD server may first send the reject message to the first SEALDD client. For example, the reject message may carry the indication information, indicating that a current resource is insufficient and a resource is being reallocated. After completing the update, the SEALDD server may send the indication information (the bandwidth available notification) to the first SEALDD client, to indicate the first SEALDD client to re-send the second request information to the SEALDD server. The SEALDD server may determine, immediately after completing the update, the bandwidth allocated to the first SEALDD client, or may determine, after the first SEALDD client re-sends the second request information, the bandwidth allocated to the first SEALDD client.

According to the method in this embodiment, when the first condition is not met, if the priority of the first user is relatively high, the SEALDD server may allocate the bandwidth to the first SEALDD client in a manner of updating the bandwidth allocated to the second SEALDD client. This helps fully use bandwidth resources of the first server, to provide services for more users.

Case 4: When the first condition is not met, the SEALDD server determines, according to the first configuration rule, whether to allocate the bandwidth to the first SEALDD client. The first configuration rule indicates to allocate the bandwidth to the first SEALDD client based on the priority of the first user when the first condition is not met, or the first configuration rule indicates to reject to allocate the bandwidth to the first SEALDD client when the first condition is not met. In this case, the method 300 may further include: The SEALDD server obtains the first configuration rule from the first server.

For example, the first configuration rule indicates to allocate the bandwidth to the first SEALDD client based on the priority of the first user when the first condition is not met. In this case, the SEALDD server may update, based on the bandwidth limit information and the priority of the first user, the bandwidth allocated by the SEALDD server to the second SEALDD client, to determine the bandwidth allocated to the first SEALDD client. For a specific manner, refer to the descriptions of the foregoing case 3. Details are not described herein again.

For another example, the first configuration rule indicates to reject to allocate the bandwidth to the first SEALDD client when the first condition is not met. In this case, the SEALDD server may send the reject message to the first SEALDD client. For a specific manner, refer to the descriptions of the foregoing case 2. Details are not described herein again.

According to the method in this embodiment, the SEALDD server may determine, according to the first configuration rule from the first server, whether to allocate the bandwidth to the first SEALDD client. Therefore, this helps flexibly formulate a bandwidth control policy based on an actual requirement.

Optionally, after the SEALDD server determines the bandwidth allocated to the first SEALDD client, the method 300 further includes: The SEALDD server establishes the connection to the SEALDD client.

In a process in which the SEALDD server establishes the connection to the SEALDD client, or after the SEALDD server establishes the connection to the SEALDD client, the method 300 further includes S330.

S330. The SEALDD server sends, to the first SEALDD client, information about the bandwidth allocated to the first SEALDD client.

In S330, the SEALDD server may send, to the first SEALDD client, the information about the bandwidth allocated to the first SEALDD client, so that the first SEALDD client can perform bandwidth control based on the bandwidth. For example, the first SEALDD client may detect an uplink data transmission rate on the connection established with the SEALDD server, and when the uplink data transmission rate on the connection reaches a bandwidth upper limit allocated to the first SEALDD client, the first SEALDD client may cache or discard a redundant data packet. In an optional embodiment, the first SEALDD client may notify, based on the bandwidth allocated to the first SEALDD client, a first client to control a generation rate of an uplink data packet. The first client is, for example, the VAL client in FIG. 2. The first SEALDD client is, for example, the SEALDD client in FIG. 2.

Optionally, in this embodiment, the bandwidth control may alternatively be performed by the SEALDD server. For example, the SEALDD server may detect a downlink data transmission rate on the connection, and when the downlink data transmission rate reaches the bandwidth upper limit allocated to the first SEALDD client, the SEALDD server may cache or discard the redundant data packet.

Optionally, the method 300 further includes: The SEALDD server sends, to the first server, the information about the bandwidth allocated to the first SEALDD client. Therefore, the first server may perform the bandwidth control based on the bandwidth. For example, the first server may control, based on the bandwidth allocated to the first SEALDD client, a generation rate of a downlink data packet sent to the first client. In a specific example, the first server may be, for example, the VAL server in FIG. 2, the first client may be, for example, the VAL client in FIG. 2, and the first SEALDD client may be, for example, the SEALDD client in FIG. 2. The downlink data packet generated by the first server may be sent to the first client via the SEALDD server and the first SEALDD client. For example, if the downlink data packet is, for example, a data packet of a video service, the first server may determine a bit rate of a video based on the bandwidth allocated to the first SEALDD client for transmitting the video service.

In this embodiment of this application, there is a possible case, that is, a sum of bandwidth upper limits that are of one or more services and that are provided by the first server may be greater than the total bandwidth of the first server. For example, it is assumed that the service provided by the first server includes the first service and the second service, the bandwidth upper limit of the first service is 50 Mbps, and a bandwidth upper limit of the second service is 60 Mbps. However, the total bandwidth of the first server may be less than a sum of the bandwidth upper limits of the first service and the second service, that is, less than 110 Mbps. For example, the total bandwidth of the first server may be 100 Mbps. In this case, even if the SEALDD server has considered the bandwidth upper limit of the service when allocating the bandwidth to the SEALDD client (for example, the first SEALDD client), a case in which the total bandwidth of the first server is insufficient, or a case in which port congestion occurs may still occur.

In view of this, this application further provides a bandwidth control method 400. The method 400 may further monitor and control bandwidth of a system after the SEALDD client (for example, the first SEALDD client) establishes the connection to the SEALDD server.

Optionally, the method 400 may be used in combination with the bandwidth control method 300 shown in FIG. 3. For example, before S410, the steps in the method 300 may be used to allocate the bandwidth to the first SEALDD client. Optionally, the method 400 may be used independently. This is not limited in this application.

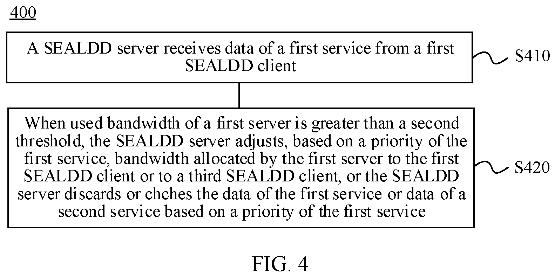

FIG. 4 is a schematic diagram of another example of a bandwidth control method according to an embodiment of this application. The method 400 may include S410 and S420.

S410. A SEALDD server receives data of a first service from a first SEALDD client.

After the first SEALDD client establishes a connection to the SEALDD server, the SEALDD client may send the data of the first service to the SEALDD server. Correspondingly, the SELDD server may receive the data of the first service from the first SEALDD client.

S420. When used bandwidth of a first server is greater than a second threshold, the SEALDD server adjusts, based on a priority of the first service, bandwidth allocated by the SEALDD server to the first SEALDD client or to a third SEALDD client, or the SEALDD server discards or caches the data of the first service or data of a second service based on a priority of the first service.

The third SEALDD client is a client that executes the second service, and the second service is a service other than the first service in services provided by the first server. That the third SEALDD client is a client that executes the second service may also be understood as that the third SEALDD client is transmitting the data of the second service by using bandwidth allocated by the first server.

That the used bandwidth of the first server is greater than the second threshold may also be described as that available bandwidth of the first server is less than a threshold. For example, when total bandwidth of the first server is 100 Mbps, if the used bandwidth of the first server is greater than 40 Mbps, it may also be described as that the available bandwidth of the first server is less than 60 Mbps.

The second threshold may be a fixed value predefined in a protocol, may be a value generated according to a predefined rule, may be a preconfigured fixed value, or may be a dynamically configured value. The SEALDD server may store the second threshold in advance, or the second threshold may be notified to the SEALDD server via another device.

It should be understood that in some scenarios, "greater than" may alternatively be replaced with "greater than or equal to", and "less than" may alternatively be replaced with "less than or equal to". In this embodiment, "greater than" and "less than" are only used as examples for description.

For example, when the used bandwidth of the first server is greater than the second threshold, a manner in which the SEALDD server controls bandwidth may include, for example, Manner 1 and Manner 2.

Manner 1: The SEALDD server adjusts, based on the priority of the first service, the bandwidth allocated by the SEALDD server to the first SEALDD client or to the third SEALDD client.

Manner 2: The SEALDD server discards or caches the data of the first service or the second service based on the priority of the first service.

The following separately describes Manner 1 and Manner 2.

### Manner 1

In Manner 1, the SEALDD server may adjust, based on the priority of the first service, the bandwidth allocated by the SEALDD server to the first SEALDD client or to the third SEALDD client.

For example, if the priority of the first service is lower than a priority of the second service, or the priority of the first service is lower than a preset second priority value, the SEALDD server may adjust the bandwidth allocated by the SEALDD server to the first SEALDD client. For example, the SEALDD server may reduce bandwidth allocated by the first server to the first SEALDD client, to alleviate or avoid port congestion.

For another example, if the priority of the first service is higher than the priority of the second service, or the priority of the first service is higher than the preset second priority value, the SEALDD server may adjust the bandwidth allocated by the SEALDD server to the third SEALDD client. For example, the SEALDD server may reduce bandwidth allocated by the first server to the third SEALDD client, to alleviate or avoid port congestion.

According to the method in this embodiment, when port congestion occurs, if the priority of the first service is relatively low, the SEALDD server may adjust bandwidth of a SEALDD client that executes the first service, or if the priority of the first service is relatively high, the SEALDD server may adjust bandwidth of a SEALDD client that executes another service. This helps alleviate or avoid port congestion and ensure that a high-priority user preferentially uses bandwidth resources.

Optionally, the method 400 further includes: The SEALDD server obtains bandwidth limit information from the first server. For example, the bandwidth limit information includes bandwidth limit information of a first user and/or a third user. The first user is a user corresponding to the first SEALDD client, and the third user is a user corresponding to the third SEALDD client. For example, the bandwidth limit information of the first user may include bandwidth limit information that is of the first service and that is provided for the first user. The bandwidth limit information that is of the first service and that is provided for the first user may include, for example, a bandwidth upper limit and a bandwidth lower limit that are of the first service and that are provided for the first user. The bandwidth limit information of the third user may include the bandwidth limit information that is of the second service and that is provided for the third user. The bandwidth limit information that is of the second service and that is provided for the third user may include, for example, a bandwidth upper limit and a bandwidth lower limit that are of the second service and that are provided for the third user.

If the SEALDD server controls the bandwidth in Manner 1, the SEALDD server may further consider the bandwidth limit information of the first user or the third user when adjusting the bandwidth allocated by the SEALDD server to the first SEALDD client or to the third SEALDD client. For example, the SEALDD server may adjust, based on the bandwidth upper limit and the bandwidth lower limit that are of the first service and that are provided for the first user, the bandwidth allocated by the SEALDD server to the first SEALDD client. For another example, the SEALDD server may adjust, based on the bandwidth upper limit and the bandwidth lower limit that are of the second service and that are provided for the third user, the bandwidth allocated by the SEALDD server to the third SEALDD client.

Optionally, the bandwidth limit information further includes bandwidth limit information of the first server. For example, the bandwidth limit information of the first server may include total bandwidth limit information of the first server and/or bandwidth limit information that is of the first service and/or the second service and that is provided by the first server. In an optional example, the bandwidth limit information may carry the second threshold.

In this embodiment, if the SEALDD server controls the bandwidth in Manner 1, the method 400 may further include: The SEALDD server sends, to the first SEALDD client, adjusted bandwidth allocated to the first SEALDD client, so that the first SEALDD client can control, based on the bandwidth, a rate at which the data of the first service is transmitted. For example, when the first SEALDD client detects that the rate at which the data of the first service is transmitted reaches the bandwidth upper limit allocated to the first SEALDD client, the first SEALDD client may cache or discard a redundant data packet. Alternatively, the method 400 may further include: The SEALDD server sends, to the third SEALDD client, adjusted bandwidth allocated to the third SEALDD client, so that the third SEALDD client can control, based on the bandwidth, a rate at which the data of the second service is transmitted. For example, when the third SEALDD client detects that the rate at which the data of the second service is transmitted reaches the bandwidth upper limit allocated to the third SEALDD client, the third SEALDD client may cache or discard a redundant data packet.

Optionally, if the SEALDD server controls the bandwidth in Manner 1, the method 400 further includes: The SEALDD server sends, to the first server, the adjusted bandwidth allocated to the first SEALDD client or to the third SEALDD client. Therefore, the first server may control, based on the adjusted bandwidth, the rate at which the data of the first service or the second service is transmitted. For example, the first server controls the rate at which the data of the first service is transmitted. The first server may control, based on the adjusted bandwidth allocated to the first SEALDD client, a generation rate of a downlink data packet sent to a first client. In a specific example, the first server may be, for example, the VAL server in FIG. 2, the first client may be, for example, the VAL client in FIG. 2, and the first SEALDD client may be, for example, the SEALDD client in FIG. 2. The downlink data packet generated by the first server may be sent to the first client via the SEALDD server and the first SEALDD client.

Optionally, in this embodiment, bandwidth control may alternatively be performed by the SEALDD server. For example, when the SEALDD server detects that the rate at which the data of the first service is transmitted reaches the bandwidth upper limit allocated to the first SEALDD client, or when the SEALDD server detects that the rate at which the data of the second service is transmitted reaches the bandwidth upper limit allocated to the third SEALDD client, the SEALDD server may cache or discard the redundant data packet.

### Manner 2

In Manner 2, the SEALDD server may discard or cache the data of the first service or the second service based on the priority of the first service.

For example, if the priority of the first service is lower than the priority of the second service, or the priority of the first service is lower than the preset second priority value, the SEALDD server may discard or cache the data of the first service, to alleviate or avoid port congestion. Discarding or caching the data of the first service may also be understood as discarding or caching the data of the first service transmitted by the first SEALDD client.

For another example, if the priority of the first service is higher than the priority of the second service, or the priority of the first service is higher than the preset second priority value, the SEALDD server may discard or cache the data of the second service, to alleviate or avoid port congestion. Discarding or caching the data of the second service may also be understood as discarding or caching the data of the second service transmitted by the third SEALDD client.

According to the method in this embodiment, when port congestion occurs, if the priority of the first service is relatively low, the SEALDD server may discard or cache the data of the first service, or if the priority of the first service is relatively high, the SEALDD server may discard or cache the data of the second service. This helps alleviate or avoid port congestion and ensure that the high-priority user preferentially uses bandwidth resources.

In an optional embodiment, the second threshold is a threshold less than the total bandwidth of the first server, and is close to the total bandwidth of the first server. In this case, if the used bandwidth of the first server is greater than the second threshold, Manner 1 may be used to control the bandwidth. In other words, if the used bandwidth of the first server does not reach the upper limit, the bandwidth allocated to the first SEALDD client or to the third SEALDD client may be adjusted to prevent port congestion.

In another optional embodiment, the second threshold is the total bandwidth of the first server. In this case, if the used bandwidth of the first server reaches the second threshold, Manner 2 may be used to control the bandwidth. In other words, if the used bandwidth of the first server has reached the upper limit, for example, the used bandwidth of the first server reaches the upper limit because a service suddenly generates a large amount of data that needs to be transmitted, the data of the first service or the second service may be discarded or cached to alleviate port congestion. Optionally, in this case, after Manner 2 is performed, Manner 1 may be further performed, to further alleviate port congestion.

Optionally, the method 400 further includes: The SEALDD server obtains a second configuration rule. The second configuration rule may indicate a manner to be used to control the bandwidth when the used bandwidth of the first server is greater than the second threshold.

For example, the second configuration rule may indicate to use Manner 1 or Manner 2 to control the bandwidth when the used bandwidth of the first server is greater than the second threshold, so that the SEALDD server can determine, according to the second configuration rule, to use Manner 1 or Manner 2 to control the bandwidth.

In a possible manner, the second configuration rule indicates to adjust, based on the priority of the first service when the used bandwidth of the first server is greater than the second threshold, the bandwidth allocated by the SEALDD server to the first SEALDD client or to the third SEALDD client. In other words, the second configuration rule indicates to use Manner 1 to control the bandwidth. In this case, the SEALDD server may determine, according to the second configuration rule, to use Manner 1 to control the bandwidth.

In another possible manner, the second configuration rule indicates to discard or cache, based on the priority of the first service when the used bandwidth of the first server is greater than the second threshold, the data of the first service or the second service. In other words, the second configuration rule indicates to use Manner 2 to control the bandwidth. In this case, the SEALDD server may determine, according to the second configuration rule, to use Manner 2 to control the bandwidth.

According to the method in this embodiment, a manner to be used to control the bandwidth may be indicated by using the second configuration rule. This helps flexibly formulate a bandwidth control policy based on an actual requirement.

Optionally, the method 400 further includes: The SEALDD server receives the priorities/priority of the first service and/or the second service from the first server. Receiving the priorities/priority of the first service and/or the second service may also be understood as receiving information about the priorities/priority of the first service and/or the second service.

In this embodiment, if the SEALDD server controls the bandwidth in Manner 2, the method 400 may further include: The SEALDD server sends first indication information to the first SEALDD client, where the first indication information may indicate the first SEALDD client to stop transmitting the data of the first service. Alternatively, the SEALDD server sends first indication information to the third SEALDD client, where the first indication information indicates the third SEALDD client to stop transmitting the data of the second service.

For example, if the SEALDD server uses the manner of discarding or caching the data of the first service to alleviate or avoid port congestion, the SEALDD server may send the first indication information to the first SEALDD client, where the first indication information may indicate the first SEALDD client to stop transmitting the data of the first service. The first indication information may carry, for example, a pending time, so that the first SEALDD client can continue transmission of the data of the first service after the pending time ends.

For another example, if the SEALDD server uses the manner of discarding or caching the data of the second service to alleviate or avoid port congestion, the SEALDD server may send the first indication information to the third SEALDD client, where the first indication information may indicate the third SEALDD client to stop transmitting the data of the second service. The first indication information may carry, for example, a pending time, so that the third SEALDD client can continue transmission of the data of the second service after the pending time ends.

Optionally, when the used bandwidth of the first server is less than a third threshold, the method 400 further includes: The SEALDD server sends second indication information to the first SEALDD client, where the second indication information indicates the first SEALDD client to continue transmission of the data of the first service. Alternatively, the SEALDD server sends second indication information to the third SEALDD client, where the second indication information indicates the third SEALDD client to continue transmission of the data of the second service.

That the used bandwidth of the first server is less than the third threshold may also be described as that the available bandwidth of the first server is greater than a threshold.

For example, if the SEALDD server sends the first indication information to the first SEALDD client, to indicate the first SEALDD client to stop transmitting the data of the first service, the SEALDD server may send the second indication information to the first SEALDD client when the used bandwidth of the first server is less than the third threshold, where the second indication information may indicate the first SEALDD client to continue transmission of the data of the first service.

For another example, if the SEALDD server sends the first indication information to the third SEALDD client, to indicate the third SEALDD client to stop transmitting the data of the second service, the SEALDD server may send the second indication information to the third SEALDD client when the used bandwidth of the first server is less than the third threshold, where the second indication information may indicate the third SEALDD client to continue transmission of the data of the second service.

The third threshold may be a fixed value predefined in a protocol, may be a value generated according to a predefined rule, may be a preconfigured fixed value, or may be a dynamically configured value. The SEALDD server may store the third threshold in advance, or the third threshold may be notified to the SEALDD server via another device. In an optional example, the third threshold and the foregoing second threshold may be a same threshold. For example, the third threshold may be carried in the bandwidth limit information from the first server.

It should be understood that, in some scenarios, "less than" may alternatively be replaced with "less than or equal to", and "greater than" may alternatively be replaced with "greater than or equal to". In this embodiment, "less than" and "greater than" are only used as examples for description.

According to the method in this embodiment, when bandwidth resources of the first server are sufficient, the SEALDD server may send the second indication information to the first SEALDD client, to indicate the first SEALDD client to continue transmission of the data of the first service. Alternatively, the SEALDD server may send the second indication information to the third SEALDD client, to indicate the third SEALDD client to continue transmission of the data of the second service. Therefore, the bandwidth resources can be fully utilized.

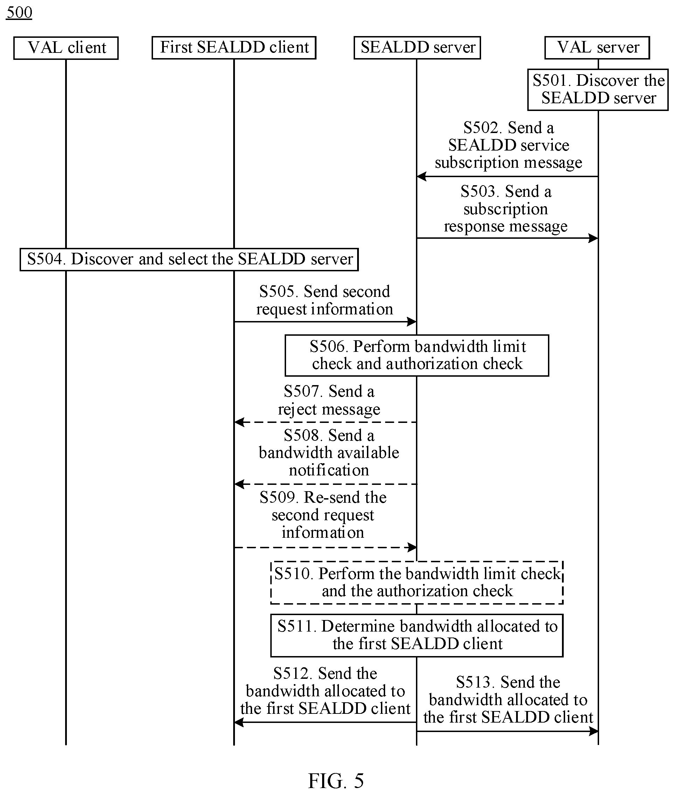

The method 300 and the method 400 provided in embodiments of this application are described above with reference to FIG. 3 and FIG. 4. For ease of understanding, the following describes possible procedures applicable to embodiments of this application with reference to FIG. 5 to FIG. 8 by using an example in which the first server is a VAL server. The SEALDD server and the first SEALDD client may provide a bandwidth control service for a VAL client and the VAL server. For example, the procedures shown in FIG. 5 to FIG. 8 are applicable to embodiments shown in FIG. 3 and FIG. 4.

FIG. 5 is a schematic flowchart of a bandwidth control method according to an embodiment of this application. The method 500 may be implemented, for example, by using the system architecture shown in FIG. 1.

The method 500 shown in FIG. 5 may include the following steps.

S501. A VAL server discovers a SEALDD server.

For example, the VAL server may discover the SEALDD server by using a common application programming interface (application programming interface, API) framework (common API framework, CAPIF).

S502. The VAL server sends a SEALDD service subscription message to the SEALDD server.

In S502, the VAL server may subscribe to a SEALDD service from the SEALDD server. For example, the SEALDD service subscription message may carry, for example, bandwidth limit information, and the bandwidth limit information may be used to determine bandwidth allocated to a first SEALDD client.

In this embodiment, the bandwidth limit information may include bandwidth limit information of the VAL server and bandwidth limit information of a first user. For the description of the bandwidth limit information, refer to S310 in the foregoing embodiment. To avoid repetition, details are not described herein again.

S503. The SEALDD server sends a subscription response message to the VAL server.

S504. A VAL client and the first SEALDD client discover and select the SEALDD server.

In S504, the VAL client and the first SEALDD client may perform discovery and selection of the SEALDD server, and obtain a control plane API interface of the SEALDD server.

S505. The first SEALDD client sends second request information to the SEALDD server.

The second request information may request to establish a connection to the SEALDD server, or request a SEALDD data transmission service.

In an implementation, the second request information may carry information about the first user and/or information about a first service. The first user is a user corresponding to the first SEALDD client. The information about the first user may include, for example, one or more of the following information: an identifier (ID) information of UE corresponding to the first user, identifier information of a user group to which the first user belongs, a type of the first user, an address section of the UE corresponding to the first user, and an IP address of the first SEALDD client. The first service is one of services provided by the VAL server. When the second request information carries the information about the first service, the second request information may be service request information for the first service, requests the SEALDD data transmission service, and requests the SEALDD server to allocate, to the first SEALDD client, bandwidth for transmission of data of the first service.

In another implementation, the first SEALDD client may send the second request information to a first port of the SEALDD server, and correspondingly, the SEALDD server may receive the second request information from the first SEALDD client through the first port, so that the SEALDD server can determine the information about the first user and/or the information about the first service based on information from the first port. The information about the first user may include, for example, one or more of the following information: the IP address of the first SEALDD client, the type of the first user, and the address section of the UE corresponding to the first user. In this implementation, the second request information may be a user plane connection establishment request sent by the first SEALDD client to the SEALDD server. For example, in this implementation, the SEALDD server may obtain the information from the first port by parsing a data packet header of the second request information, and further determine the information about the first user and/or the information about the first service based on the information from the first port.

S506. The SEALDD server performs bandwidth limit check and authorization check.

In a possible implementation, that the SEALDD server performs bandwidth limit check and authorization check includes: determining whether a first condition is met.

For example, the first condition may include: used bandwidth of the VAL server is less than a first threshold. Optionally, the first condition may further include one or more of the following: (1) Used bandwidth that is of the first service and that is provided by the VAL server is less than a fourth threshold; (2) Available bandwidth that is of the first service and that is provided by the VAL server is greater than a minimum bandwidth limit that is of the first service and that is provided for the first user; (3) The first SEALDD client can use (execute) the first service.

The bandwidth limit check may be used to check one or more of the following content: whether the used bandwidth of the VAL server is less than the first threshold, whether the used bandwidth that is of the first service and that is provided by the VAL server is less than the fourth threshold, and whether the available bandwidth that is of the first service and that is provided by the VAL server is greater than the minimum bandwidth limit that is of the first service and that is provided for the first user.

When the bandwidth limit check includes a plurality of items of content, if a check result of each item is "Yes", it indicates that the bandwidth limit check succeeds, and if a check result of any item is No, it indicates that the bandwidth limit check fails.

The authorization check may be used to check whether the first SEALDD client can use (execute) the first service. If a check result is "Yes", it indicates that the authorization check succeeds, and if a check result is "No", it indicates that the authorization check fails.

It should be further understood that in some scenarios, "greater than" in the first condition may alternatively be replaced with "greater than or equal to", and "less than" may alternatively be replaced with "less than or equal to". In this embodiment, "greater than" and "less than" are only used as examples for description.

Optionally, if one of the bandwidth limit check and the authorization check fails, the method 500 includes S507.

S507. The SEALDD server sends a reject message to the first SEALDD client.

The reject message may be used to reject to establish the connection to the SEALDD client, and further reject to allocate the bandwidth to the first SEALDD client.

In an implementation, if the second request information carries the information about the first user and/or the information about the first service, the SEALDD server may send the reject message to the first SEALDD client through a control plane, where the reject message may carry a pending time. The first SEALDD client may re-send the second request information to the SEALDD server after the pending time ends.

In another implementation, if the second request information is the user plane connection establishment request sent by the first SEALDD client to the SEALDD server, the SEALDD server may reject, through the user plane, the connection establishment request of the first SEALDD client.

Optionally, after S507, when the first condition can be met, the method 500 may include S508.

S508. The SEALDD server sends a bandwidth available notification to the first SEALDD client.

The bandwidth available notification may indicate the first SEALDD client to re-send the second request information to the SEALDD server.

Optionally, the method 500 further includes S509.

S509. The first SEALDD client re-sends the second request information to the SEALDD server.

For example, the first SEALDD client may re-send the second request information to the SEALDD server based on the pending time in S507. For example, the first SEALDD client may re-send the second request information to the SEALDD server after the pending time ends.

For another example, the first SEALDD client may re-send the second request information to the SEALDD server based on the bandwidth available notification in S508. For example, after receiving the bandwidth available notification, the first SEALDD client may re-send the second request information to the SEALDD server.

Optionally, after S509, the method further includes S510.

S510. The SEALDD server performs the bandwidth limit check and the authorization check.

In S510, the SEALDD server may perform the bandwidth limit check and the authorization check again. If the bandwidth limit check and the authorization check succeed, S511 to S513 are performed, and if one of the bandwidth limit check and the authorization check fails, S507 is returned to.

S511. The SEALDD server determines bandwidth allocated to the first SEALDD client.

If the bandwidth limit check and the authorization check in S506 or S510 succeed, the SEALDD server may determine, based on the bandwidth limit information, the bandwidth allocated to the first SEALDD client. For a manner in which the SEALDD server determines, based on the bandwidth limit information, the bandwidth allocated to the first SEALDD client, refer to S320 in the foregoing embodiment. To avoid repetition, details are not described herein again.

Optionally, the method 500 further includes: The SEALDD client establishes the connection to the SEALDD server.

In a process in which the SEALDD server establishes the connection to the SEALDD client, or after the SEALDD server establishes the connection to the SEALDD client, the method 500 further includes S512 and S513.

S512. The SEALDD server sends, to the first SEALDD client, the bandwidth allocated to the first SEALDD client.

In S512, the SEALDD server may send, to the first SEALDD client, information about the bandwidth allocated to the first SEALDD client, so that the SEALDD client can perform bandwidth control based on the bandwidth.

Optionally, in this embodiment, bandwidth control may alternatively be performed by the SEALDD server. For a specific manner in which the first SEALDD client and the SEALDD server perform the bandwidth control, refer to S330 in the foregoing embodiment. To avoid repetition, details are not described herein again.

S513. The SEALDD server sends, to the VAL server, the bandwidth allocated to the first SEALDD client.

In S513, the SEALDD server may send, to the VAL server, the information about the bandwidth allocated to the first SEALDD client, so that the VAL server can perform the bandwidth control based on the bandwidth. For a specific manner in which the VAL server performs the bandwidth control, refer to S330 in the foregoing embodiment. To avoid repetition, details are not described herein again.

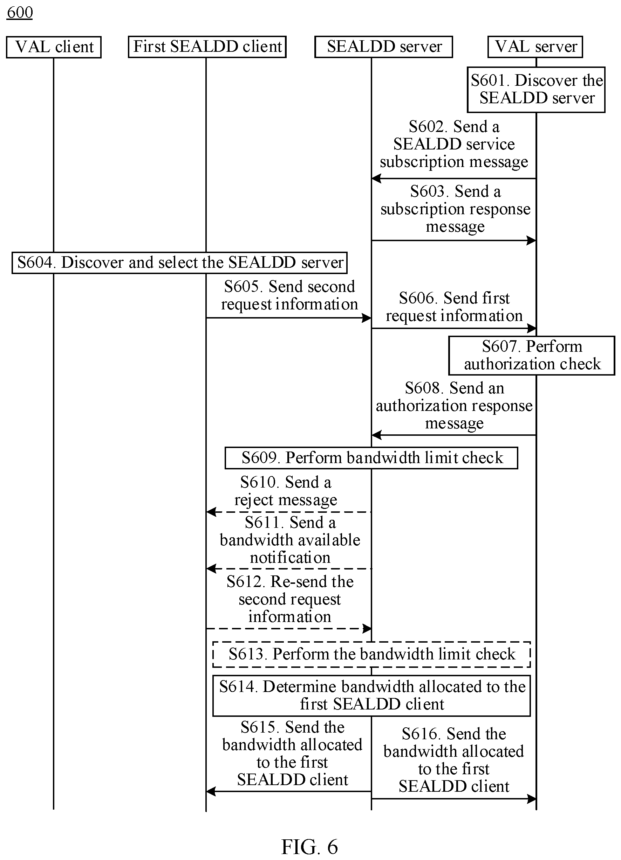

FIG. 6 is another schematic flowchart of a bandwidth control method according to an embodiment of this application. The method 600 may be implemented, for example, by using the system architecture shown in FIG. 1.

The method 600 shown in FIG. 6 may include the following steps.

S601. A VAL server discovers a SEALDD server.

For example, the VAL server may discover the SEALDD server by using a CAPIF.

S602. The VAL server sends a SEALDD service subscription message to the SEALDD server.

For example, the SEALDD service subscription message may carry, for example, bandwidth limit information of the VAL server in bandwidth limit information. For the description of the bandwidth limit information of the VAL server, refer to S310 in the foregoing embodiment. To avoid repetition, details are not described herein again.

S603. The SEALDD server sends a subscription response message to the VAL server.

S604. A VAL client and a first SEALDD client discover and select the SEALDD server.

In S604, the VAL client and the first SEALDD client may perform discovery and selection of the SEALDD server, and obtain a control plane API interface of the SEALDD server.

S605. The first SEALDD client sends second request information to the SEALDD server.

For this step, refer to S505 in the foregoing embodiment. To avoid repetition, details are not described herein again.

S606. The SEALDD server sends first request information to the VAL server.

The first request information may request the VAL server to send bandwidth limit information of a first user in the bandwidth limit information to the SEALDD server. The first user is a user corresponding to the first SEALDD client.

The first request information may carry information about the first user. The information about the first user may include, for example, one or more of the following information: identifier (ID) information of UE corresponding to the first user, identifier information of a user group to which the first user belongs, a type of the first user, an address section of the UE corresponding to the first user, or an IP address of the first SEALDD client. Optionally, if the second request information carries the information about the first service that is provided by the VAL server, or if the information about the first service can be determined based on information about a first port, the first request information may further carry the information about the first service. In this case, the first request information may request the VAL server to send, to the SEALDD server, bandwidth limit information that is of the first service and that is provided for the first user.

S607. The VAL server performs authorization check.

The authorization check may include check whether the first SEALDD client can use (execute) the first service. If the first SEALDD client can use (execute) the first service, the method further includes: The VAL server determines the bandwidth limit information of the first user.

In a possible case, the information about the first user includes the identifier (ID) information of the UE corresponding to the first user, and the SEALDD server may determine the bandwidth limit information of the first user based on an identifier of the UE.

In another possible case, the information about the first user includes one or more of the following information: the identifier information of the user group to which the first user belongs, the type of the first user, an address section corresponding to the first user, and the IP address of the first SEALDD client. In this case, the SEALDD server may determine the type of the first user based on the information about the first user, and determine bandwidth limit information of a user of this type based on this type, where the bandwidth limit information of the user of this type may be used as the bandwidth limit information of the first user.

Optionally, if the first request information carries the information about the first service, the bandwidth limit information of the first user includes the bandwidth limit information that is of the first service and that is provided for the first user.

S608. The VAL server sends an authorization response message to the SEALDD server.

The authorization response message may carry the bandwidth limit information of the first user. Optionally, if the first request information carries the information about the first service, the bandwidth limit information of the first user includes the bandwidth limit information that is of the first service and that is provided for the first user.

S609. The SEALDD server performs bandwidth limit check.

The bandwidth limit check may be used to check one or more of the following content: whether used bandwidth of the VAL server is less than a first threshold, whether used bandwidth that is of the first service and that is provided by the VAL server is less than a fourth threshold, and whether available bandwidth that is of the first service and that is provided by the VAL server is greater than a minimum bandwidth limit that is of the first service and that is provided for the first user.

Optionally, if the bandwidth limit check fails, the method 600 includes S610.

S610. The SEALDD server sends a reject message to the first SEALDD client.

Optionally, after S610, when a condition that the bandwidth limit check succeeds can be met, the method 600 may include S611.

S611. The SEALDD server sends a bandwidth available notification to the first SEALDD client.

Optionally, the method 600 further includes S612.

S612. The first SEALDD client re-sends the second request information to the SEALDD server.

For S610 to S612, refer to S507 to S509 in the foregoing embodiment. To avoid repetition, details are not described herein again.

Optionally, after S612, the method further includes S613.

S613. The SEALDD server performs the bandwidth limit check.

In S613, the SEALDD server may perform the bandwidth limit check again. If the bandwidth limit check succeeds, S614 to S616 are performed. If the bandwidth limit check fails, S610 is returned to.

S614. The SEALDD server determines bandwidth allocated to the first SEALDD client.

If the bandwidth limit check in S609 or S613 succeeds, the SEALDD server may determine, based on the bandwidth limit information, the bandwidth allocated to the first SEALDD client. For a manner in which the SEALDD server determines, based on the bandwidth limit information, the bandwidth allocated to the first SEALDD client, refer to S320 in the foregoing embodiment. To avoid repetition, details are not described herein again.

Optionally, the method 600 further includes: The SEALDD client establishes a connection to the SEALDD server.

In a process in which the SEALDD server establishes the connection to the SEALDD client, or after the SEALDD server establishes the connection to the SEALDD client, the method 600 further includes S615 and S616.

S615. The SEALDD server sends, to the first SEALDD client, the bandwidth allocated to the first SEALDD client.

S616. The SEALDD server sends, to the VAL server, the bandwidth allocated to the first SEALDD client.

For S615 and S616, refer to S512 and S513 in the foregoing embodiment. To avoid repetition, details are not described herein again.

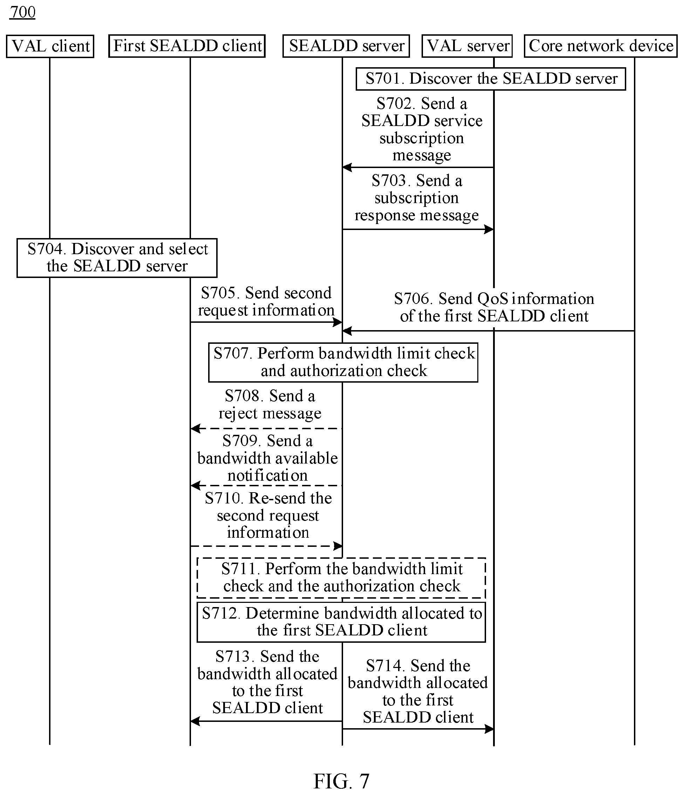

FIG. 7 is another schematic flowchart of a bandwidth control method according to an embodiment of this application. The method 700 may be implemented, for example, by using the system architecture shown in FIG. 1.

The method 700 shown in FIG. 7 may include the following steps.

S701. A VAL server discovers a SEALDD server.

S702. The VAL server sends a SEALDD service subscription message to the SEALDD server.

For example, the SEALDD service subscription message may carry bandwidth limit information, and the bandwidth limit information may be used to determine bandwidth allocated to a first SEALDD client.

In this embodiment, the bandwidth limit information may include bandwidth limit information of the VAL server and bandwidth limit information of a first user. For the description of the bandwidth limit information, refer to S310 in the foregoing embodiment. To avoid repetition, details are not described herein again.

S703. The SEALDD server sends a subscription response message to the VAL server.

S704. A VAL client and the first SEALDD client discover and select the SEALDD server.

S705. The first SEALDD client sends second request information to the SEALDD server.

For S701 to S705, refer to S501 to S505 in the foregoing embodiment. To avoid repetition, details are not described herein again.

S706. A core network device sends QoS information of the first SEALDD client to the SEALDD server.

In S706, the SEALDD server may subscribe to a QoS monitoring notification of the first SEALDD client from the core network device, so that the core network device can send the QoS information of the first SEALDD client to the SEALDD server. For the description of the QoS information of the first SEALDD client, refer to S320 in the foregoing embodiment. To avoid repetition, details are not described herein again.

S707. The SEALDD server performs bandwidth limit check and authorization check.

Optionally, the method 700 further includes S708 to S711.

S708. The SEALDD server sends a reject message to the first SEALDD client.

S709. The SEALDD server sends a bandwidth available notification to the first SEALDD client.

S710. The first SEALDD client re-sends the second request information to the SEALDD server.

S711. The SEALDD server performs the bandwidth limit check and the authorization check.

For S707 to S711, refer to S506 to S510 in the foregoing embodiment. To avoid repetition, details are not described herein again.

S712. The SEALDD server determines bandwidth allocated to the first SEALDD client.

If the bandwidth limit check and the authorization check in S707 or S711 succeed, the SEALDD server may determine the bandwidth allocated to the first SEALDD client.

In this embodiment, the SEALDD server may determine, based on the bandwidth limit information from the VAL server and the QoS information of the first SEALDD client from the core network device, the bandwidth allocated to the first SEALDD client. For a manner in which the SEALDD server determines, based on the bandwidth limit information and the QoS information of the first SEALDD client, the bandwidth allocated to the first SEALDD client, refer to S320 in the foregoing embodiment. To avoid repetition, details are not described herein again.

S713. The SEALDD server sends, to the first SEALDD client, the bandwidth allocated to the first SEALDD client.

S714. The SEALDD server sends, to the VAL server, the bandwidth allocated to the first SEALDD client.

For S713 and S714, refer to S512 and S513 in the foregoing embodiment. To avoid repetition, details are not described herein again.

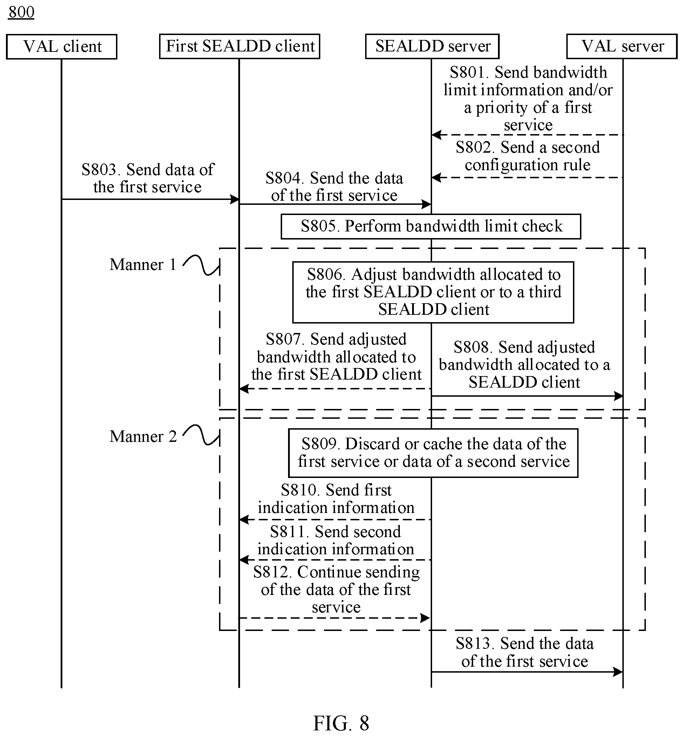

FIG. 8 is another schematic flowchart of a bandwidth control method according to an embodiment of this application. The method 800 may be used to further monitor and control bandwidth of a system after a SEALDD client (for example, a first SEALDD client) establishes a connection to the SEALDD server. The method 800 may be implemented, for example, by using the system architecture shown in FIG. 1.

In an optional embodiment, before S801, bandwidth may be alternatively allocated to the first SEALDD client by using any one of the method 500 to the method 700.

In the following, it is assumed that the first SEALDD client is a client corresponding to a first user, a third SEALDD client is a client corresponding to a third user, the third SEALDD client is a client that executes a second service, and the second service is a service other than a first service in services provided by a VAL server.

The method 800 shown in FIG. 8 may include the following steps.

Optionally, the method 800 includes S801.

S801. The VAL server sends bandwidth limit information and/or a priority of at least one service to the SEALDD server.

Optionally, the VAL server may send the bandwidth limit information to the SEALDD server. For example, the bandwidth limit information includes bandwidth limit information of the first user and/or the third user. Optionally, the bandwidth limit information further includes bandwidth limit information of the VAL server. For the detailed description of the bandwidth limit information, refer to S420 in the foregoing embodiment. To avoid repetition, details are not described herein again.

Optionally, the VAL server may further send the priority of the at least one service to the SEALDD server. The at least one service includes, for example, the first service and/or the second service.

Optionally, the method 800 further includes S802.

S802. The VAL server sends a second configuration rule to the SEALDD server.

The second configuration rule may indicate a manner to be used to control the bandwidth when used bandwidth of the VAL server is greater than a second threshold. For example, the second configuration rule may indicate to control the bandwidth in Manner 1 or Manner 2 in this embodiment when the used bandwidth of the VAL server is greater than the second threshold.

S803. The VAL client sends data of the first service to the first SEALDD client.

S804. The first SEALDD client sends the data of the first service to the SEALDD server.

The first SEALDD client may encapsulate the data of the first service from the VAL client and send encapsulated data to the SEALDD server.

S805. The SEALDD server performs bandwidth limit check.

For example, that the SEALDD server performs the bandwidth limit check includes check whether the used bandwidth of the VAL server is greater than the second threshold. For example, the second threshold may be carried in the bandwidth limit information from the VAL server.

It should be understood that, in some scenarios, "greater than" may alternatively be replaced with "greater than or equal to". In this embodiment, "greater than" is only used as an example for description.

For example, when the used bandwidth of the VAL server is greater than the second threshold, a manner in which the SEALDD server controls the bandwidth may include, for example, Manner 1 and Manner 2. In this embodiment, Manner 1 may include S806 to S808.

S806. The SEALDD server adjusts bandwidth allocated to the first SEALDD client or to the third SEALDD client.

In S806, the SEALDD server may adjust, based on the priority of the first service, the bandwidth allocated by the SEALDD server to the first SEALDD client or to the third SEALDD client.

For example, if the priority of the first service is lower than a priority of the second service, or the priority of the first service is lower than a preset second priority value, the SEALDD server may adjust the bandwidth allocated by the SEALDD server to the first SEALDD client. For example, the SEALDD server may reduce bandwidth allocated by the VAL server to the first SEALDD client, to alleviate or avoid port congestion.

For another example, if the priority of the first service is higher than the priority of the second service, or the priority of the first service is higher than the preset second priority value, the SEALDD server may adjust the bandwidth allocated by the SEALDD server to the third SEALDD client. For example, the SEALDD server may reduce bandwidth allocated by the VAL server to the third SEALDD client, to alleviate or avoid port congestion.

If the SEALDD server controls the bandwidth in Manner 1, the SEALDD server may further consider the bandwidth limit information of the first user or the third user when adjusting the bandwidth allocated by the SEALDD server to the first SEALDD client or to the third SEALDD client. The bandwidth limit information of the first user and/or the third user may be included in the bandwidth limit information in S801.

S807. The SEALDD server sends, to the first SEALDD client, adjusted bandwidth allocated to the first SEALDD client.

If the bandwidth of the first SEALDD client is adjusted in S806, the SEALDD server may send, to the first SEALDD client, the adjusted bandwidth allocated to the first SEALDD client, so that the first SEALDD client can control, based on the bandwidth, a rate at which the data of the first service is transmitted.

Optionally, if the bandwidth of the third SEALDD client is adjusted in S806, the SEALDD server may send, to the third SEALDD client, adjusted bandwidth allocated to the third SEALDD client, so that the third SEALDD client can control, based on the bandwidth, a rate at which data of the second service is transmitted.

S808. The SEALDD server sends, to the VAL server, adjusted bandwidth allocated to a SEALDD client.

The SEALDD server may send, to the VAL server, the adjusted bandwidth allocated to the first SEALDD client or to the third SEALDD client, so that the VAL server can control, based on the adjusted bandwidth, the rate at which the data of the first service or the second service is transmitted.

Optionally, in this embodiment, bandwidth control may alternatively be performed by the SEALDD server. For example, when the SEALDD server detects that the rate at which the data of the first service is transmitted reaches a bandwidth upper limit allocated to the first SEALDD client, or when the SEALDD server detects that the rate at which the data of the second service is transmitted reaches a bandwidth upper limit allocated to the third SEALDD client, the SEALDD server may cache or discard a redundant data packet.

In this embodiment, Manner 2 may include S809 to S812.

S809. The SEALDD server discards or caches the data of the first service or the second service.

In S809, the SEALDD server may discard or cache the data of the first service or the second service based on the priority of the first service.

For example, if the priority of the first service is lower than the priority of the second service, or the priority of the first service is lower than the preset second priority value, the SEALDD server may discard or cache the data of the first service, to alleviate or avoid port congestion.

For another example, if the priority of the first service is higher than the priority of the second service, or the priority of the first service is higher than the preset second priority value, the SEALDD server may discard or cache the data of the second service, to alleviate or avoid port congestion.

Optionally, if the SEALDD server uses the manner of discarding or caching the data of the first service to alleviate or avoid port congestion, S810 is performed.

S810. The SEALDD server sends first indication information to the first SEALDD client.

The first indication information may indicate the first SEALDD client to stop transmitting the data of the first service. The first indication information may carry, for example, a pending time, so that the first SEALDD client can continue transmission of the data of the first service after the pending time ends.

Optionally, if the SEALDD server uses the manner of discarding or caching the data of the second service to alleviate or avoid port congestion, the method 800 may include: The SEALDD server sends first indication information to the third SEALDD client, where the first indication information may indicate the third SEALDD client to stop transmitting the data of the second service. The first indication information may carry, for example, a pending time, so that the third SEALDD client can continue transmission of the data of the second service after the pending time ends.

Optionally, if the SEALDD server sends the first indication information to the first SEALDD client, S811 is performed.

S811. The SEALDD server sends second indication information to the first SEALDD client.

The second indication information may indicate the first SEALDD client to continue transmission of the data of the first service.

Optionally, if the SEALDD server sends the first indication information to the third SEALDD client, the method 800 may include: The SEALDD server sends second indication information to the third SEALDD client, where third indication information may indicate the third SEALDD client to continue transmission of the data of the second service.

If S810 and S811 are performed, S812 is performed.

S812. The first SEALDD client continues sending of the data of the first service to the SEALDD server.

In S812, the first SEALDD client may continue sending of the data of the first service to the SEALDD server based on the pending time in S810 or based on the second indication information in S811. For example, the first SEALDD client may continue sending of the data of the first service to the SEALDD server after the pending time in S810 ends. For another example, after receiving the second indication information, the first SEALDD client may continue sending of the data of the first service to the SEALDD server.

S813. The SEALDD server sends the data of the first service to the VAL server.

In S813, the SEALDD server may forward, to the VAL server, the data of the first service admitted in S804 and/or the data of the first service admitted in S812.

It can be understood that the examples in FIG. 3 to FIG. 8 in embodiments of this application are merely intended to help a person skilled in the art understand embodiments of this application, but are not intended to limit embodiments of this application to specific scenarios in the examples. It is clear that a person skilled in the art can make various equivalent modifications or changes according to the examples shown in FIG. 3 to FIG. 8, and such modifications or changes also fall within the scope of embodiments of this application.

It may be further understood that some optional features in embodiments of this application may not depend on another feature in some scenarios, or may be combined with another feature in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that values of various numerical sequence numbers in embodiments of this application do not mean execution sequences, are merely distinguished for ease of description, and should not be construed as any limitation on the implementation process of embodiments of this application.

It may be further understood that, in embodiments of this application, numerical sequence numbers such as first and second are merely distinguished for ease of description, and are not intended to limit the scope of embodiments of this application.

It may be further understood that some message names in embodiments of this application do not limit the protection scope of embodiments of this application.

It may be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It may be further understood that, in the foregoing method embodiments, a method and an operation implemented by a server (for example, the SEALDD server, or the first server) may alternatively be implemented by a component (for example, a chip or a circuit) of the server. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

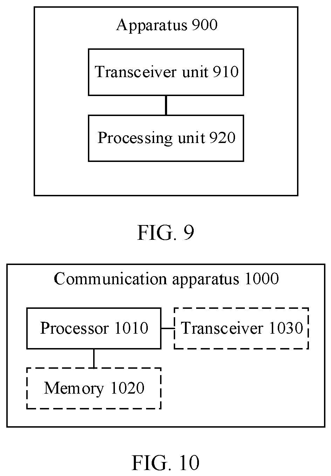

FIG. 9 is a schematic block diagram of a communication apparatus according to an embodiment of this application. The apparatus 900 includes a transceiver unit 910 and a processing unit 920. The transceiver unit 910 may be configured to implement a corresponding communication function. The transceiver unit 910 may also be referred to as a communication interface or a communication unit. The processing unit 920 may be configured to implement a corresponding processing function.

Optionally, the apparatus 900 further includes a storage unit. The storage unit may be configured to store instructions and/or data. The processing unit 920 may read the instructions and/or data in the storage unit, to enable the apparatus to implement an action of a server (for example, the SEALDD server, or the first server) in the foregoing method embodiments.

In a first design, the apparatus 900 may be the server (for example, the SEALDD server) in the foregoing embodiments, or may be a component (for example, a chip) of the server. For example, the apparatus 900 may implement a step or a procedure corresponding to the SEALDD server in the foregoing method embodiments. The transceiver unit 910 may be configured to perform operations related to sending and receiving of the SEALDD server in the foregoing method embodiments. The processing unit 920 may be configured to perform a processing-related operation of the SEALDD server in the foregoing method embodiments. When the apparatus 900 is the SEALDD server, the transceiver unit 910 may be a transceiver or an input/output interface, and the processing unit 920 may be at least one processor. Optionally, the transceiver may be a transceiver circuit. Optionally, the input/output interface may be an input/output circuit. When the apparatus 900 is a chip, a chip system, or a circuit in the SEALDD server, the transceiver unit 910 may be an input/output interface, an interface circuit, an output circuit, an input circuit, a pin, a related circuit, or the like on the chip, the chip system, or the circuit, and the processing unit 920 may be at least one processor, a processing circuit, a logic circuit, or the like.

In a possible implementation, the transceiver unit 910 is configured to obtain bandwidth limit information from a first server, where the bandwidth limit information includes bandwidth limit information of the first server and/or bandwidth limit information of a first user. The processing unit 920 is configured to determine, based on the bandwidth limit information, bandwidth allocated to a first SEALDD client, where the first SEALDD client is a client corresponding to the first user. The transceiver unit 910 is further configured to send, to the first SEALDD client, information about the bandwidth allocated to the first SEALDD client.

Optionally, the bandwidth limit information of the first server includes total bandwidth limit information of the first server and/or bandwidth limit information that is of a first service and that is provided by the first server. The bandwidth limit information of the first user includes bandwidth limit information that is of the first service and that is provided for the first user.

Optionally, the bandwidth allocated to the first SEALDD client includes bandwidth allocated to the first SEALDD client for transmission of data of the first service.

Optionally, the processing unit 920 is further configured to determine, based on whether a first condition is met, whether to allocate the bandwidth to the first SEALDD client, where the first condition includes: used bandwidth of the first server is less than a first threshold or available bandwidth of the first server is greater than a first threshold.

Optionally, the first condition further includes: available bandwidth that is of the first service and that is provided by the first server is greater than a minimum bandwidth limit that is of the first service and that is provided for the first user.

Optionally, when the first condition is met, the processing unit 920 is further configured to determine to allocate the bandwidth to the first SEALDD client; when the first condition is not met, the processing unit 920 is further configured to reject to allocate the bandwidth to the first SEALDD client; when the first condition is not met, the processing unit 920 is further configured to determine, based on a priority of the first user, whether to allocate the bandwidth to the first SEALDD client; or when the first condition is not met, the processing unit 920 is further configured to determine, according to a first configuration rule, whether to allocate the bandwidth to the first SEALDD client, where the first configuration rule indicates to allocate the bandwidth to the first SEALDD client based on a priority of the first user when the first condition is not met, or the first configuration rule indicates to reject to allocate the bandwidth to the first SEALDD client when the first condition is not met.

Optionally, the transceiver unit 910 is further configured to obtain the first configuration rule from the first server.

Optionally, the processing unit 920 is further configured to: update, based on the bandwidth limit information and the priority of the first user, bandwidth allocated by the apparatus 900 to a second SEALDD client corresponding to a second user, and determine the bandwidth allocated to the first SEALDD client.

Optionally, the transceiver unit 910 is further configured to send first request information to the first server, where the first request information carries information about the first user. The transceiver unit 910 is further configured to receive the bandwidth limit information of the first user from the first server.

Optionally, the bandwidth limit information of the first user includes the bandwidth limit information that is of the first service and that is provided for the first user, and the first request information further includes the information about the first service.

Optionally, the transceiver unit 910 is further configured to receive second request information from the first SEALDD client, where the second request information carries the information about the first user and/or information about the first service.

Optionally, the transceiver unit 910 is further configured to receive the second request information from the first SEALDD client through a first port. The processing unit 920 is further configured to determine the information about the first user and/or the information about the first service based on information from the first port.

Optionally, the processing unit 920 is further configured to determine, based on the bandwidth limit information and at least one of a priority of the first SEALDD client and quality of service QoS information of the first SEALDD client, the bandwidth allocated to the first SEALDD client.

Optionally, the transceiver unit 910 is further configured to obtain the priority of the first SEALDD client from the first server, and/or the transceiver unit 910 is further configured to obtain the quality of service QoS information of the first SEALDD client from a core network device.

Optionally, the transceiver unit 910 is further configured to send, to the first server, the information about the bandwidth allocated to the first SEALDD client.

Optionally, the transceiver unit 910 is further configured to receive the data of the first service from the first SEALDD client. When the used bandwidth of the first server is greater than a second threshold or the available bandwidth of the first server is less than a second threshold, the processing unit 920 is further configured to adjust, based on a priority of the first service, bandwidth allocated by the first server to the first SEALDD client or to a third SEALDD client, where the third SEALDD client is a client that executes a second service, and the second service is a service other than the first service in services provided by the first server.

Optionally, the transceiver unit 910 is further configured to obtain a second configuration rule, where the second configuration rule indicates to: when the used bandwidth of the first server is greater than the second threshold or the available bandwidth of the first server is less than the second threshold, adjust, based on the priority of the first service, the bandwidth allocated by the first server to the first SEALDD client or to the third SEALDD client.

Optionally, the transceiver unit 910 is further configured to receive the data of the first service from the first SEALDD client. When the used bandwidth of the first server is greater than a second threshold or the available bandwidth of the first server is less than a second threshold, the processing unit 920 is further configured to discard or cache the data of the first service or data of a second service based on a priority of the first service, where the second service is a service other than the first service in services provided by the first server.

Optionally, the transceiver unit 910 is further configured to obtain a second configuration rule, where the second configuration rule indicates to: when the used bandwidth of the first server is greater than the second threshold or the available bandwidth of the first server is less than the second threshold, discard or cache the data of the first service or the data of the second service based on the priority of the first service.

Optionally, the transceiver unit 910 is further configured to receive the priority of the first service from the first server.

Optionally, when the used bandwidth of the first server is less than a third threshold or the available bandwidth of the first server is greater than a third threshold, the transceiver unit 910 is further configured to send indication information to the first SEALDD client, where the indication information indicates the first SEALDD client to continue transmission of the data of the first service; or when the used bandwidth of the first server is less than a third threshold or the available bandwidth of the first server is greater than a third threshold, the transceiver unit 910 is further configured to send indication information to a third SEALDD client, where the indication information indicates the third SEALDD client to continue transmission of the data of the second service.

In another possible implementation, the transceiver unit 910 is configured to receive data of a first service from a first SEALDD client. When used bandwidth of a first server is greater than a second threshold or available bandwidth of a first server is less than a second threshold, the processing unit 920 is configured to adjust, based on a priority of the first service, bandwidth allocated by the first server to the first SEALDD client or to a third SEALDD client, or the processing unit 920 is configured to discard or cache the data of the first service or data of a second service based on a priority of the first service, where the third SEALDD client is a client that executes the second service, and the second service is a service other than the first service in services provided by the first server.

Optionally, the transceiver unit 910 is further configured to obtain a second configuration rule, where the second configuration rule indicates to: when the used bandwidth of the first server is greater than the second threshold or the available bandwidth of the first server is less than the second threshold, adjust, based on the priority of the first service, the bandwidth allocated by the first server to the first SEALDD client or to the third SEALDD client.

Optionally, the transceiver unit 910 is further configured to obtain a second configuration rule, where the second configuration rule indicates to: when the used bandwidth of the first server is greater than the second threshold or the available bandwidth of the first server is less than the second threshold, discard or cache the data of the first service or the data of the second service based on the priority of the first service.

Optionally, when the used bandwidth of the first server is less than a third threshold or the available bandwidth of the first server is greater than a third threshold, the transceiver unit 910 is further configured to send indication information to the first SEALDD client, where the indication information indicates the first SEALDD client to continue transmission of the data of the first service; or when the used bandwidth of the first server is less than a third threshold or the available bandwidth of the first server is greater than a third threshold, the transceiver unit 910 is further configured to send indication information to a third SEALDD client, where the indication information indicates the third SEALDD client to continue transmission of the data of the second service.

Optionally, the transceiver unit 910 is further configured to receive the priority of the first service from the first server.

In a second design, the apparatus 900 may be the server (for example, the first server) in the foregoing embodiments, or may be a component (for example, a chip) of the server. For example, the apparatus 900 may implement a step or a procedure corresponding to the first server in the foregoing method embodiments. The transceiver unit 910 may be configured to perform operations related to sending and receiving of the first server in the foregoing method embodiments. The processing unit 920 may be configured to perform a processing-related operation of the first server in the foregoing method embodiments. When the apparatus 900 is the first server, the transceiver unit 910 may be a transceiver or an input/output interface, and the processing unit 920 may be at least one processor. Optionally, the transceiver may be a transceiver circuit. Optionally, the input/output interface may be an input/output circuit. When the apparatus 900 is a chip, a chip system, or a circuit in the first server, the transceiver unit 910 may be an input/output interface, an interface circuit, an output circuit, an input circuit, a pin, a related circuit, or the like on the chip, the chip system, or the circuit, and the processing unit 920 may be at least one processor, a processing circuit, a logic circuit, or the like.

In a possible implementation, the processing unit 920 is configured to determine bandwidth limit information, where the bandwidth limit information includes bandwidth limit information of the apparatus 900 and/or bandwidth limit information of a first user, the bandwidth limit information is used to determine bandwidth allocated to a first service enabler architecture layer data delivery SEALDD client, and the first SEALDD client is a client corresponding to the first user. The transceiver unit 910 is configured to send the bandwidth limit information to a SEALDD server.

Optionally, the bandwidth limit information of the apparatus 900 includes total bandwidth limit information of the apparatus 900 and/or bandwidth limit information that is of a first service and that is provided by the apparatus 900. The bandwidth limit information of the first user includes bandwidth limit information that is of the first service and that is provided for the first user.

Optionally, the bandwidth allocated to the first SEALDD client includes bandwidth allocated to the first SEALDD client for transmission of data of the first service.

Optionally, the transceiver unit 910 is further configured to send a first configuration rule to the SEALDD server, where the first configuration rule indicates to allocate the bandwidth to the first SEALDD client based on a priority of the first user when a first condition is not met, or the first configuration rule indicates to reject to allocate the bandwidth to the first SEALDD client when a first condition is not met, and the first condition includes: used bandwidth of the apparatus 900 is less than a first threshold or available bandwidth of the apparatus 900 is greater than a first threshold.

Optionally, the first condition further includes: available bandwidth that is of the first service and that is provided by the apparatus 900 is greater than a minimum bandwidth limit that is of the first service and that is provided for the first user.

Optionally, the transceiver unit 910 is further configured to receive first request information from the SEALDD server, where the first request information carries information about the first user. The transceiver unit 910 is further configured to send the bandwidth limit information of the first user to the SEALDD server.

Optionally, the bandwidth limit information of the first user includes the bandwidth limit information that is of the first service and that is provided for the first user, and the first request information further includes the information about the first service.

Optionally, the transceiver unit 910 is further configured to send the priority of the first user to the SEALDD server, where the priority of the first user is used to determine the bandwidth allocated to the first SEALDD client.

Optionally, the transceiver unit 910 is further configured to receive, from the SEALDD server, information about the bandwidth allocated to the first SEALDD client.

Optionally, the transceiver unit 910 is further configured to send a second configuration rule to the SEALDD server, where the second configuration rule indicates to: when the used bandwidth of the apparatus 900 is greater than a second threshold or the available bandwidth of the apparatus 900 is less than a second threshold, adjust, based on a priority of the first service, bandwidth allocated by the apparatus 900 to the first SEALDD client or to a third SEALDD client, where the third SEALDD client is a client that executes a second service, and the second service is a service other than the first service in services provided by the apparatus 900.

Optionally, the transceiver unit 910 is further configured to send a second configuration rule to the SEALDD server, where the second configuration rule indicates to: when the used bandwidth of the apparatus 900 is greater than a second threshold or the available bandwidth of the apparatus 900 is less than a second threshold, discard or cache the data of the first service or data of a second service based on a priority of the first service, where the second service is a service other than the first service in services provided by the apparatus 900.

Optionally, the transceiver unit 910 is further configured to send the priority of the first service to the SEALDD server.

It should be understood that a specific process in which the units perform the foregoing corresponding steps is described in detail in the foregoing method embodiments. For brevity, details are not described herein.

It should also be understood that the apparatus 900 herein is presented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the SEALDD server in the foregoing embodiments, and may be configured to perform procedures and/or steps corresponding to the SEALDD server in the foregoing method embodiments. Alternatively, the apparatus 900 may be specifically the first server in the foregoing embodiments, and may be configured to perform procedures and/or steps corresponding to the first server in the foregoing method embodiments. To avoid repetition, details are not described herein again.

The apparatus 900 in the foregoing solutions has a function of implementing corresponding steps performed by the server (for example, the SEALDD server or the first server) in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to respectively perform sending and receiving operations and a related processing operation in the method embodiments.

In addition, the transceiver unit 910 may alternatively be a transceiver circuit (for example, the transceiver circuit may include a receiver circuit and a transmitter circuit), and the processing unit 920 may be a processing circuit.

It should be noted that the apparatus in FIG. 9 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

FIG. 10 shows another communication apparatus 1000 according to an embodiment of this application. The apparatus 1000 includes a processor 1010. The processor 1010 is configured to: execute a computer program or instructions stored in a memory 1020, or read data/signaling stored in the memory 1020, to perform the methods in the foregoing method embodiments. Optionally, there are one or more processors 1010.

Optionally, as shown in FIG. 10, the apparatus 1000 further includes the memory 1020, and the memory 1020 is configured to store the computer program or the instructions and/or the data. The memory 1020 may be integrated with the processor 1010, or may be disposed separately. Optionally, there are one or more memories 1020.

Optionally, as shown in FIG. 10, the apparatus 1000 further includes a transceiver 1030, and the transceiver 1030 is configured to receive and/or send a signal. For example, the processor 1010 is configured to control the transceiver 1030 to receive and/or send a signal.

In a solution, the apparatus 1000 is configured to implement an operation performed by the server (for example, the SEALDD server, or the first server) in the foregoing method embodiments.

For example, the processor 1010 is configured to execute the computer program or the instructions stored in the memory 1020, to implement related operations of the server (for example, the SEALDD server, or the first server) in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logical device, discrete gate or transistor logical device, discrete hardware component, or the like. The general-purpose processor may be a microprocessor, or the processor may be any conventional processor, or the like.

It may be further understood that the memory mentioned in embodiments of this application may be a volatile memory or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

An embodiment of this application further provides a computer-readable storage medium. The computer-readable storage medium stores computer instructions used to implement the method performed by the server (for example, the SEALDD server, or the first server) in the foregoing method embodiments.

For example, when a computer program is executed by a computer, the computer is enabled to implement the method performed by the server (for example, the SEALDD server, or the first server) in the foregoing method embodiments.

An embodiment of this application further provides a computer program product, including instructions. When the instructions are executed by a computer, the method performed by the server (for example, the SEALDD server, or the first server) in the foregoing method embodiments is implemented.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)). For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A bandwidth control method, comprising:
obtaining, by a service enabler architecture layer data delivery SEALDD server, bandwidth limit information from a first server, wherein the bandwidth limit information comprises bandwidth limit information of the first server and/or bandwidth limit information of a first user;
determining, by the SEALDD server based on the bandwidth limit information, bandwidth allocated to a first SEALDD client, wherein the first SEALDD client is a client corresponding to the first user; and
sending, by the SEALDD server to the first SEALDD client, information about the bandwidth allocated to the first SEALDD client.

2. The method according to claim 1, wherein
the bandwidth limit information of the first server comprises total bandwidth limit information of the first server and/or bandwidth limit information that is of a first service and that is provided by the first server; and
the bandwidth limit information of the first user comprises bandwidth limit information that is of the first service and that is provided for the first user.

3. The method according to claim 2, wherein
the bandwidth allocated to the first SEALDD client comprises bandwidth allocated to the first SEALDD client for transmission of data of the first service.

4. The method according to any one of claims 1 to 3, wherein before the determining, by the SEALDD server based on the bandwidth limit information, bandwidth allocated to a first SEALDD client, the method further comprises:
determining, by the SEALDD server based on whether a first condition is met, whether to allocate the bandwidth to the first SEALDD client, wherein the first condition comprises: used bandwidth of the first server is less than a first threshold or available bandwidth of the first server is greater than a first threshold.

5. The method according to claim 4, wherein
the first condition further comprises: available bandwidth that is of the first service and that is provided by the first server is greater than a minimum bandwidth limit that is of the first service and that is provided for the first user.

6. The method according to claim 4 or 5, wherein the determining, by the SEALDD server based on whether a first condition is met, whether to allocate the bandwidth to the first SEALDD client comprises:
when the first condition is met, determining, by the SEALDD server, to allocate the bandwidth to the first SEALDD client;
when the first condition is not met, rejecting, by the SEALDD server, to allocate the bandwidth to the first SEALDD client;
when the first condition is not met, determining, by the SEALDD server based on a priority of the first user, whether to allocate the bandwidth to the first SEALDD client; or
when the first condition is not met, determining, by the SEALDD server according to a first configuration rule, whether to allocate the bandwidth to the first SEALDD client, wherein the first configuration rule indicates to allocate the bandwidth to the first SEALDD client based on a priority of the first user when the first condition is not met, or the first configuration rule indicates to reject to allocate the bandwidth to the first SEALDD client when the first condition is not met.

7. The method according to claim 6, wherein the method further comprises:
obtaining, by the SEALDD server, the first configuration rule from the first server.

8. The method according to claim 6, wherein the rejecting, by the SEALDD server, to allocate the bandwidth to the first SEALDD client comprises:
sending, by the SEALDD server, a reject message to the first SEALDD client, wherein the reject message carries a pending time; and
re-receiving, by the SEALDD server, second request information from the first SEALDD client after the pending time ends, wherein the second request information carries information about the first user and/or information about the first service.

9. The method according to any one of claims 1 to 8, wherein the bandwidth limit information comprises the bandwidth limit information of the first user, and the obtaining, by a SEALDD server, bandwidth limit information from a first server comprises:
sending, by the SEALDD server, first request information to the first server, wherein the first request information carries the information about the first user; and
receiving, by the SEALDD server, the bandwidth limit information of the first user from the first server.

10. The method according to claim 9, wherein
the bandwidth limit information of the first user comprises the bandwidth limit information that is of the first service and that is provided for the first user; and
the first request information further comprises the information about the first service.

11. The method according to claim 9 or 10, wherein before the sending, by the SEALDD server, first request information to the first server, the method further comprises:
receiving, by the SEALDD server, the second request information from the first SEALDD client, wherein the second request information carries the information about the first user and/or the information about the first service.

12. The method according to claim 9 or 10, wherein before the sending, by the SEALDD server, first request information to the first server, the method further comprises:
receiving, by the SEALDD server, the second request information from the first SEALDD client through a first port; and
determining, by the SEALDD server, the information about the first user and/or the information about the first service based on information from the first port.

13. The method according to any one of claims 1 to 12, wherein the determining, by the SEALDD server based on the bandwidth limit information, bandwidth allocated to a first SEALDD client comprises:
determining, by the SEALDD server based on the bandwidth limit information and at least one of a priority of the first SEALDD client and quality of service QoS information of the first SEALDD client, the bandwidth allocated to the first SEALDD client.

14. The method according to claim 13, wherein the method further comprises:
obtaining, by the SEALDD server, the priority of the first SEALDD client from the first server; and/or
obtaining, by the SEALDD server, the quality of service QoS information of the first SEALDD client from a core network device.

15. The method according to any one of claims 1 to 14, wherein the method further comprises:
sending, by the SEALDD server to the first server, the information about the bandwidth allocated to the first SEALDD client.

16. The method according to any one of claims 1 to 15, wherein after the determining, by the SEALDD server based on the bandwidth limit information, bandwidth allocated to a first SEALDD client, the method further comprises:
receiving, by the SEALDD server, the data of the first service from the first SEALDD client; and
when the used bandwidth of the first server is greater than a second threshold or the available bandwidth of the first server is less than a second threshold, adjusting, by the SEALDD server based on a priority of the first service, the bandwidth allocated by the SEALDD server to the first SEALDD client or bandwidth allocated by the SEALDD server to a third SEALDD client, wherein the third SEALDD client is a client that executes a second service, and the second service is a service other than the first service in services provided by the first server.

17. The method according to claim 16, wherein the method further comprises:
obtaining, by the SEALDD server, a second configuration rule, wherein the second configuration rule indicates to: when the used bandwidth of the first server is greater than the second threshold or the available bandwidth of the first server is less than the second threshold, adjust, based on the priority of the first service, the bandwidth allocated by the SEALDD server to the first SEALDD client or to the third SEALDD client.

18. The method according to any one of claims 1 to 15, wherein after the determining, by the SEALDD server based on the bandwidth limit information, bandwidth allocated to a first SEALDD client, the method further comprises:
receiving, by the SEALDD server, the data of the first service from the first SEALDD client; and
when the used bandwidth of the first server is greater than a second threshold or the available bandwidth of the first server is less than a second threshold, discarding or caching, by the SEALDD server, the data of the first service or data of a second service based on a priority of the first service, wherein the second service is a service other than the first service in services provided by the first server.

19. The method according to claim 18, wherein the method further comprises:
obtaining, by the SEALDD server, a second configuration rule, wherein the second configuration rule indicates to: when the used bandwidth of the first server is greater than the second threshold or the available bandwidth of the first server is less than the second threshold, discard or cache the data of the first service or the data of the second service based on the priority of the first service.

20. The method according to claim 18 or 19, wherein the method further comprises:
when the used bandwidth of the first server is less than a third threshold or the available bandwidth of the first server is greater than a third threshold, sending, by the SEALDD server, indication information to the first SEALDD client, wherein the indication information indicates the first SEALDD client to continue transmission of the data of the first service; or
when the used bandwidth of the first server is less than a third threshold or the available bandwidth of the first server is greater than a third threshold, sending, by the SEALDD server, indication information to a third SEALDD client, wherein the indication information indicates the third SEALDD client to continue transmission of the data of the second service.

21. A bandwidth control method, comprising:
determining, by a first server, bandwidth limit information, wherein the bandwidth limit information comprises bandwidth limit information of the first server and/or bandwidth limit information of a first user, the bandwidth limit information is used to determine bandwidth allocated to a first service enabler architecture layer data delivery SEALDD client, and the first SEALDD client is a client corresponding to the first user; and
sending, by the first server, the bandwidth limit information to a SEALDD server.

22. The method according to claim 21, wherein
the bandwidth limit information of the first server comprises total bandwidth limit information of the first server and/or bandwidth limit information that is of a first service and that is provided by the first server; and
the bandwidth limit information of the first user comprises bandwidth limit information that is of the first service and that is provided for the first user.

23. The method according to claim 22, wherein
the bandwidth allocated to the first SEALDD client comprises bandwidth allocated to the first SEALDD client for transmission of data of the first service.

24. The method according to any one of claims 21 to 23, wherein the method further comprises:
sending, by the first server, a first configuration rule to the SEALDD server, wherein the first configuration rule indicates to allocate the bandwidth to the first SEALDD client based on a priority of the first user when a first condition is not met, or the first configuration rule indicates to reject to allocate the bandwidth to the first SEALDD client when a first condition is not met, and the first condition comprises: used bandwidth of the first server is less than a first threshold or available bandwidth of the first server is greater than a first threshold.

25. The method according to claim 24, wherein rejecting to allocate the bandwidth to the first SEALDD client comprises:
sending, by the SEALDD server, a reject message to the first SEALDD client, wherein the reject message carries a pending time, wherein
the pending time is used by the SEALDD server to re-receive second request information from the first SEALDD client after the pending time ends, wherein the second request information carries information about the first user and/or information about the first service.

26. The method according to claim 24, wherein
the first condition further comprises: available bandwidth that is of the first service and that is provided by the first server is greater than a minimum bandwidth limit that is of the first service and that is provided for the first user.

27. The method according to any one of claims 21 to 26, wherein the bandwidth limit information comprises the bandwidth limit information of the first user, and sending, by the SEALDD server, the bandwidth limit information to the first server comprises:
receiving, by the first server, first request information from the SEALDD server, wherein the first request information carries the information about the first user; and
sending, by the first server, the bandwidth limit information of the first user to the SEALDD server.

28. The method according to claim 27, wherein
the bandwidth limit information of the first user comprises the bandwidth limit information that is of the first service and that is provided for the first user; and
the first request information further comprises the information about the first service.

29. The method according to any one of claims 21 to 28, wherein the method further comprises:
sending, by the first server, the priority of the first user to the SEALDD server, wherein the priority of the first user is used to determine the bandwidth allocated to the first SEALDD client.

30. The method according to any one of claims 21 to 29, wherein the method further comprises:
receiving, by the first server from the SEALDD server, information about the bandwidth allocated to the first SEALDD client.

31. The method according to any one of claims 23 to 30, wherein the method further comprises:
sending, by the first server, a second configuration rule to the SEALDD server, wherein the second configuration rule indicates to: when the used bandwidth of the first server is greater than a second threshold or the available bandwidth of the first server is less than a second threshold, adjust, based on a priority of the first service, the bandwidth allocated by the SEALDD server to the first SEALDD client or bandwidth allocated by the SEALDD server to a third SEALDD client, wherein the third SEALDD client is a client that executes a second service, and the second service is a service other than the first service in services provided by the first server.

32. The method according to any one of claims 23 to 30, wherein the method further comprises:
sending, by the first server, a second configuration rule to the SEALDD server, wherein the second configuration rule indicates to: when the used bandwidth of the first server is greater than a second threshold or the available bandwidth of the first server is less than a second threshold, discard or cache the data of the first service or data of a second service based on a priority of the first service, wherein the second service is a service other than the first service in services provided by the first server.

33. A bandwidth control method, comprising:
receiving, by a SEALDD server, data of a first service from a first SEALDD client; and
when used bandwidth of a first server is greater than a second threshold or available bandwidth of a first server is less than a second threshold, adjusting, by the SEALDD server based on a priority of the first service, bandwidth allocated by the SEALDD server to the first SEALDD client or to a third SEALDD client, or discarding or caching, by the SEALDD server, the data of the first service or data of a second service based on a priority of the first service, wherein
the third SEALDD client is a client that executes the second service, and the second service is a service other than the first service in services provided by the first server.

34. The method according to claim 33, wherein the method further comprises:
obtaining, by the SEALDD server, a second configuration rule, wherein the second configuration rule indicates to: when the used bandwidth of the first server is greater than the second threshold or the available bandwidth of the first server is less than the second threshold, adjust, based on the priority of the first service, the bandwidth allocated by the SEALDD server to the first SEALDD client or to the third SEALDD client.

35. The method according to claim 33, wherein the method further comprises:
obtaining, by the SEALDD server, a second configuration rule, wherein the second configuration rule indicates to: when the used bandwidth of the first server is greater than the second threshold or the available bandwidth of the first server is less than the second threshold, discard or cache the data of the first service or the data of the second service based on the priority of the first service.

36. The method according to any one of claims 33 to 35, wherein the method further comprises:
when the used bandwidth of the first server is less than a third threshold or the available bandwidth of the first server is greater than a third threshold, sending, by the SEALDD server, indication information to the first SEALDD client, wherein the indication information indicates the first SEALDD client to continue transmission of the data of the first service; or
when the used bandwidth of the first server is less than a third threshold or the available bandwidth of the first server is greater than a third threshold, sending, by the SEALDD server, indication information to the third SEALDD client, wherein the indication information indicates the third SEALDD client to continue transmission of the data of the second service.

37. The method according to any one of claims 33 to 36, wherein the method further comprises:
receiving, by the SEALDD server, the priority of the first service from the first server.

38. A bandwidth control method, comprising:
receiving, by a first SEALDD client, information about allocated bandwidth from a SEALDD server or a reject message from a SEALDD server, wherein the first SEALDD client is a client corresponding to a first user; and
the information about the bandwidth is determined based on bandwidth limit information provided by a first server, and the bandwidth limit information comprises bandwidth limit information of the first server and/or bandwidth limit information of the first user.

39. The method according to claim 38, wherein
the bandwidth limit information of the first server comprises total bandwidth limit information of the first server and/or bandwidth limit information that is of a first service and that is provided by the first server; and
the bandwidth limit information of the first user comprises bandwidth limit information that is of the first service and that is provided for the first user.

40. The method according to claim 38, wherein
the bandwidth of the first SEALDD client comprises bandwidth of the first SEALDD client for transmission of data of the first service.

41. The method according to any one of claims 38 to 40, wherein the method further comprises:
sending, by the first SEALDD client, a second request message to the SEALDD server, wherein the second request information carries information about the first user and/or information about the first service.

42. The method according to any one of claims 38 to 40, wherein the method further comprises:
sending, by the first SEALDD client, a second request message to a first port, wherein the first port is used by the SEALDD server to receive the second request message, and information from the first port is used by the SEALDD server to determine information about the first user and/or information about the first service.

43. The method according to claim 41 or 42, wherein the reject message carries a pending time; and
the first SEALDD client re-sends the second request information to the SEALDD server after the pending time ends, wherein the second request information carries the information about the first user and/or the information about the first service.

44. A bandwidth control system, comprising a SEALDD server, a first server, and a first SEALDD client, wherein the SEALDD server is configured to perform the method according to any one of claims 1 to 20 or the method according to any one of claims 33 to 37, the first server is configured to perform the method according to any one of claims 21 to 32, and the first SEALDD client is configured to perform the method according to any one of claims 38 to 43.

45. A communication apparatus, comprising:
a unit configured to implement the method according to any one of claims 1 to 20, a unit configured to implement the method according to any one of claims 21 to 32, a unit configured to implement the method according to any one of claims 33 to 37, or a unit configured to implement the method according to any one of claims 38 to 43.

46. A communication apparatus, comprising a processor and a memory, wherein
the memory is configured to store a computer program or instructions, and the processor is configured to execute the computer program or the instructions in the memory, to enable the method according to any one of claims 1 to 20 to be performed, the method according to any one of claims 21 to 32 to be performed, the method according to any one of claims 33 to 37 to be performed, or the method according to any one of claims 38 to 43 to be performed.

47. A computer-readable storage medium, wherein the computer-readable storage medium stores a computer program, and when the computer program is run on a computer, the computer is enabled to perform the method according to any one of claims 1 to 20, the method according to any one of claims 21 to 32, the method according to any one of claims 33 to 37, or the method according to any one of claims 38 to 43.

48. A computer program product, wherein the computer program product comprises instructions for performing the method according to any one of claims 1 to 20, instructions for performing the method according to any one of claims 21 to 32, instructions for performing the method according to any one of claims 33 to 37, or instructions for performing the method according to any one of claims 38 to 43.
